# EUROPÄISCHE PATENTSCHRIFT

(11) **EP 0 850 477 B1**
(45) Veröffentlichungstag und Bekanntmachung des Hinweises auf die Patenterteilung: **21.04.2004**
(21) Anmeldenummer: 97931755.9
(22) Anmeldetag: 03.07.1997
(51) Int. Cl.: G11B 27/031, G11B 7/26, G11B 27/34, G11B 27/36

(54) **VERFAHREN UND ANORDNUNG ZUM BESCHREIBEN VON GLASMASTERN MIT BINÄRDATEN**
PROCESS AND ARRANGEMENT FOR WRITING BINARY DATA ONTO GLASS MASTERS
PROCEDE ET DISPOSITIF POUR INSCRIRE DES DONNEES BINAIRES SUR DES DISQUES DE VERRE

(30) Priorität: 11.07.1996 DE 19628005
(43) Veröffentlichungstag der Anmeldung: 01.07.1998
(73) Patentinhaber: Sonopress Produktionsgesellschaft für Ton- und Informationsträger mbH, 33311 Gütersloh (DE)
(72) Erfinder: GÜNTHER, Christian, D-37124 Rosdorf (DE); MARTENS, Wolfgang, D-33335 Gütersloh (DE); REDDER-POHLMANN, Artur, D-33378 Rheda-Wiedenbrück (DE)
(74) Vertreter: Prietsch, Reiner, Dipl.-Ing.
(86) Internationale Anmeldenummer: PCT/EP1997/003501
(87) Internationale Veröffentlichungsnummer: WO 1998/002885

(56) Entgegenhaltungen:
- EP-A- 0 074 841
- EP-A- 0 312 405
- EP-A- 0 312 406
- EP-A- 0 500 044
- EP-A- 0 598 392
- EP-A- 0 708 445
- DE-A- 3 820 835
- DE-U- 9 414 675
- US-A- 5 325 352
- YONGE M ET AL: "AN AUDIO WORKSTATION NETWORK FOR TELEVISION POSTPRODUCTION" 13.Juni 1991 , BROADCAST SESSIONS, MONTREUX, JUNE 13 - 18, 1991, VOL. -, NR. -, PAGE(S) 231 - 238 , CCITT XP000268892 190720 siehe das ganze Dokument

## Beschreibung

Die Erfindung betrifft ein System und ein Verfahren zur Bereitstellung von steuernden und aufzuzeichnenden Daten für mindestens einen zur Herstellung von Mastern für optische Datenträger bestimmten Laser-Beam-Recorder.

### I) Stand der Technik

Ein derartiges System und ein Verfahren dieser Art sind aus der EP-A-0 708 445 bekannt und speziell auf die Massenproduktion von CD-Rs ausgelegt, die einzeln und direkt mittels eines Laserstrahls beschrieben werden. Das System eignet sich jedoch auch zum Schreiben, genauer gesagt zum Belichten von Glasmastern, die am Anfang des mehrstufigen Herstellprozesses für CDs und andere optische Datenträger stehen. Das bekannte System bezweckt in erster Linie die Bereitstellung von steuernden und aufzuzeichnenden Daten in einem Multisession-Format, das einen Unterfall des CD-ROM-Formats ist. In zweiter Linie bezweckt das System, aus einer CD-R ausgelesene Audio- und Videodaten als steuernde und aufzuzeichnende Daten für mindestens einen zur Herstellung von Mastern für optische Datenträger bestimmenden Laser-Beam-Recorder bereitzustellen. Gemäß einer verbesserten Ausführungsform werden die ausgelesenen Daten auf der Festplatte eines Rechners zwischengespeichert und gleichzeitig in spezieller Weise formatiert.

Derzeit werden die an CD-Hersteller zum Zweck der Vervielfältigung übermittelten Nutzinformationen je nach vorhandener Infrastruktur des auftraggebenden Kunden und der Art der Nutzinformation auf einer Vielzahl unterschiedlichster Musik-/Datenträger mit jeweils sehr spezifischen Eigenschaften angeliefert. Die Wahl der Musik-/Datenträgerart beeinflußt dabei maßgeblich sowohl Zeitdauer als auch Tiefe des im CD-Werk notwendigen Bearbeitunasaufwandes. Aktuell sind branchenweit folgende Musik-/Datenträger von Bedeutung:

| **Musik- /Datenträger** | **Lese-/Schreib- geschwindigkeit** | **sonstige wichtige Eigenschaften** |
|---|---|---|
| Analoge Bänder | Echtzeit | digitale Wandlung erforderlich, |
| | | niedrige Geschwindigkeit, |
| | | hoher Bearbeitungsaufwand |
| | | |
| 9-Spur-Bänder | Echtzeit | niedrige Speicherkapazität. |
| | | niedrige Geschwindigkeit, |
| | | hoher Bearbeitungsaufwand |
| U-matic-Bänder, | Echtzeit | niedrige Geschwindigkeit, |
| | | fehleranfällig, |
| | | mittlere Speicherkapazität, |
| | | mittlerer bis hoher Aufwand |
| | | |
| Digitales Audio Tape (DAT-Bänder), | Echtzeit | mittlere Speicherkapazität, |
| | | niedrige Geschwindigkeit, |
| | | mittlerer Bearbeitungsaufwand |
| | | |
| Exabyte-Bänder | ca. 2fache- 3fache Echtzeit | hohe Geschwindigkeit, |
| | | relativ hohe Datensicherheit, |
| | | hohe Speicherkapazität, |
| | | geringer bis mittlerer Aufwand |
| | | |
| CD-Write Once (CD-WO); Magneto-optische Disc (MO-Disc) | ca. 2fache Echtzeit | hohe Geschwindigkeit, |
| | | relativ hohe Datensicherheit, |
| | | hohe Speicherkapazität, |
| | | geringer Bearbeitungsaufwand |

### Vorverarbeitung (Premasteringprozeß)

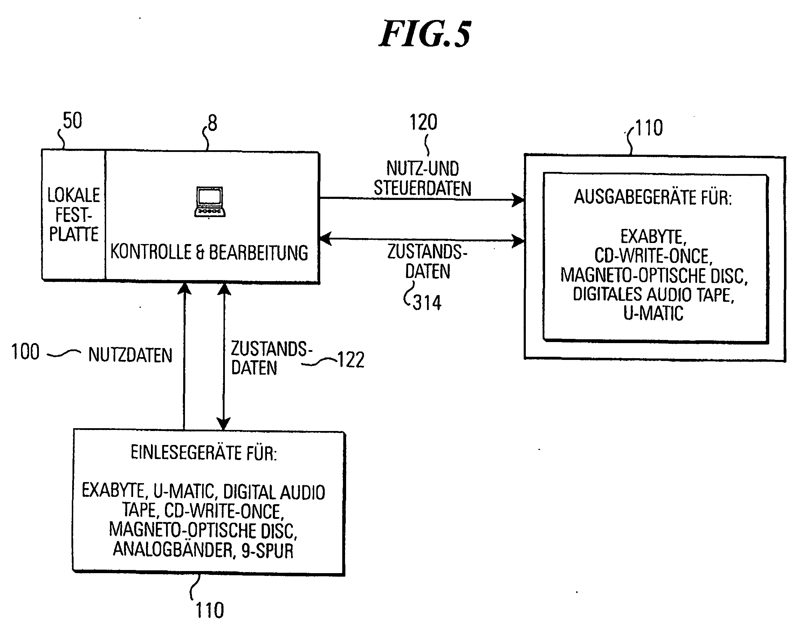

Je nach Art des angelieferten Musik-/Datenträgers, seiner mechanischphysikalischen Qualität, sowie der Struktur der Nutzinformationen sind bei dem CD-Hersteller in einem sogenannten Premasteringprozeß musik- bzw. datenträgerspezifische Bearbeitungschritte erforderlich. Solche Bearbeitungsschritte können z.B. die Eingangsuntersuchung auf trägerbedingte Fehler (z.B. schlechte Bandqualität), eine Ergänzung um Zusatzinformationen (Subcode-Daten, Erstellung eines Protokolls mit den die CD beschreibenden Daten (Disc-Description-Protokoll; DDP)), gegebenenfalls die gemäß Kundenauftrag erforderliche Korrektur gespeicherter Nutzinformationen oder deren Struktur umfassen. Diese Kontrollprozesse und Bearbeitungen werden im allgemeinen auf PCs oder Workstations durchgeführt, an die die benötigten trägerspezifischen Einund Ausgabegeräte angeschlossen sind (Siehe Figur 5).

Zur Durchführung der Kontroll- und Bearbeitungsprozesse ist je nach Musik/Datenträgerart oder erforderlicher Bearbeitungstiefe häufig eine auszugsweise oder sogar vollständige Überspielung auf die Festptatte(n) des Kontroll- oder Bearbeitungssystemes notwendig. Zur Gewährleistung einer fehlerfreien, bitgenauen Überspielung der Nutzinformationen auf die jeweilige Festplatte kann zeitgleich ein Fehlerprotokoll mitgeschrieben werden. Außerdem kann die Lesegeschwindigkeit der Eingabegeräte auf einen niedrigeren Wert als technisch möglich reduziert werden. Aktuell werden dabei je nach Art des Musik-/Datenträgers und der verwendeten Geräte Lesegeschwindigkeiten von einfacher bis maximal knapp dreifacher Echtzeit, bezogen auf die Spieldauer einer CD, erzielt (Siehe Tabelle auf Seite 1).

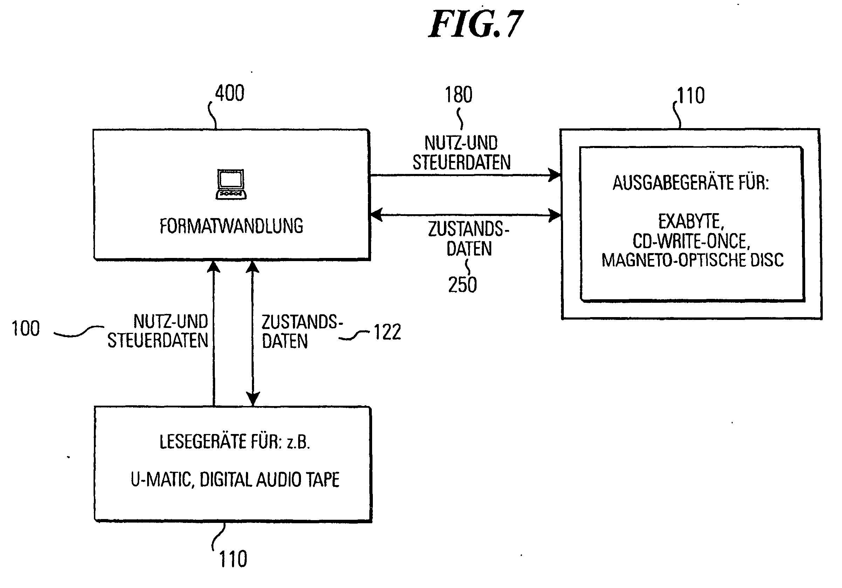

Sofern eine Bearbeitung im Premastering notwendig war oder der verwendete Musik-/Datenträgertyp keine ausreichenden Leistungswerte für die nachfolgenden Prozeßschritte aufweist, werden die Nutz- und Steuerinformationen anschließend auf Musik-/Datenträger umkopiert, die eine möglichst hohe Lesegeschwindigkeit und Datensicherheit gewährleisten (Siehe Figur 7). Je nach Infrastruktur und Erfordernissen des CD-Werkes kommen dazu derzeit Exabyte-Bänder, CD-WO-Discs, MO-Discs, oder auch U-matic-Bänder zum Einsatz (im folgenden "Überspielmedien" genannt). Die innerhalb des Premasteringprozesses erstellten Überspielmedien enthalten im allgemeinen alle später auf der CD vorhandenen Nutzinformationen (Hauptkanal- und Subcodedaten), ergänzt um Steuerdaten (z.B. DDP) für den später stattfindenden Masteringprozeß. Nutz- und Steuerinformationen können auch auf getrennten Musik/Datenträgern abgelegt sein (z.B. Nutzinhalte auf Exabyteband, Steuerinformation auf Floppy Disc).

Vergleichbar zum Vorgehen während des Einlesens der Nutzinformationen kann bei der Überspielung auf andere Musik-/Datenträger ein Fehlerprotokoll mitgeschrieben werden.

Wurde der Premasteringprozeß beendet und hat das erstellte Überspielmedium alle Kontroll- und Bearbeitungsschritte erfolgreich durchlaufen, müssen die darauf gespeicherten Nutzinformationen auf einen optischen Zwischenträger (lichtempfindliche Glasplatte, im folgenden "Glasmaster" genannt) übertragen werden, mit dem in weiteren Prozeßschritten eine galvanische Abformung durchgeführt wird.

### Erstellung des Glaszwischenträgers (Masteringprozeß)

Als Zwischenträger dienen Glasplatten mit speziellen mechanischen sowie optischen Eigenschaften. Zur Vorbereitung des Masteringvorganges werden die Glasplatten gereinigt und mit einer sehr dünnen, eng tolerierten, lichtempfindlichen Schicht beaufschlagt, die anschließend durch Wärmezufuhr in entsprechenden Vorrichtungen ausgehärtet wird. Die dabei zur Anwendung kommenden Verfahren und Geräte sind denen der Halbleiterindustrie ähnlich. Aufgrund der hohen Anforderungen an die Reinheit der verwendeten Materialien, der geringen Dickentoleranzen der aufgetragenen, lichtempfindlichen Schicht und der erforderlichen Prozeßstabilität ist dieser Vorgang sehr zeit- und geräteintensiv.

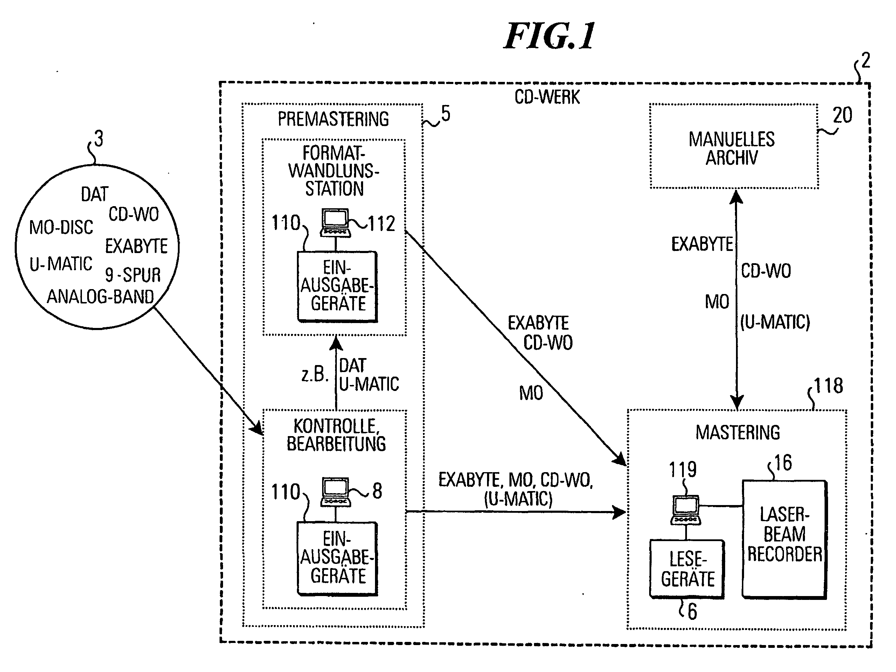

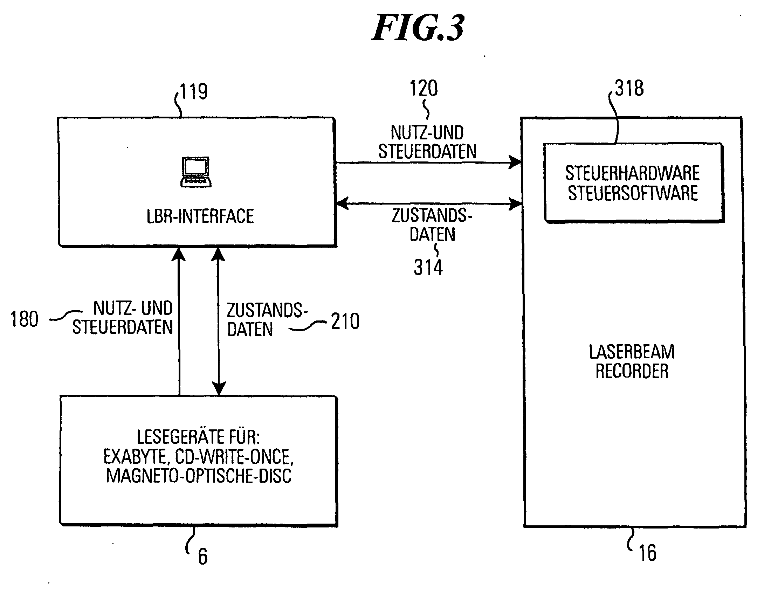

Die fertig vorbereiteten Glasplatten werden vor Beginn des eigentlichen Masteringvorganges in einen Laserstrahlbelichter (Laser-Beam-Recorder, LBR) eingelegt, an den wiederum ein Schnittstellengerät (LBR-Interface) sowie Lesegeräte für die Überspielmedien angeschlossen sind. Gemäß der oben aufgezählten Überspielmedien werden dazu üblicherweise CD-, Exabyte- oder U-matic-Laufwerke verwendet (Siehe Figur 1, Figur 3). Aufgabe des Laser-Beam-Recorders, seiner Steuerhardware, des LBR-Interfaces, und der angeschlossenen Lesegeräte ist es, die auf den Überspielmedien befindlichen Nutz- und Steuerinformationen in einen dem gewünschten CD-Typ erforderlichen Datenstrom zu wandeln und die für den jeweiligen CD-Typ notwendige logische Datenstruktur auf die lichtempfindliche Schicht der Glasplatte zu übertragen.

Zu diesem Zweck wird mit Hilfe des LBR-Interfaces und der Steuerhard- und -software des Laser-Beam-Recorders der auf die sich drehende Glasplatte auftreffende Laserstrahl im Zusammenspiel aus Nutz- und Steuerinformationen moduliert. Das Ergebnis ist eine fortlaufende Folge von Lichtimpulsen genau definierter Längen und Pausen, die sich auf der Glasplatte als spiralförmige Kette belichteter und unbelichteter Stellen abbildet. Die Wandlung der Nutz- und Steuerinformationen in einen ununterbrochenen Datenstrom, sowie die Geschwindigkeit des Ausleseprozesses der Überspielmedien müssen dabei eng aufeinander abgestimmt sein. Da die eingesetzten Laser-Beam-Recorder zwingend einen ununterbrochenen Datenstrom voraussetzen, ist die Einhaltung einer durchschnittlichen Mindestdatenrate bei Lesegeräten und Überspielmedien erforderlich. Nach heutigem Stand der Technik bestimmt dabei die Geschwindigkeit der Lesegeräte maßgeblich die Schnelligkeit, in der der gewünschte Datenstrom auf die Glasplatte geschrieben werden kann.

Aufgrund der Unumkehrbarkeit dieses Überspielvorganges führen unkorrigierbare Lesefehler der Einlesegeräte, Unterbrechungen des Datenstromes zum Laser-Beam-Recorder oder Fehler auf der Übertragungsstrecke im Laser-Beam-Recorder zu einem Glasmaster, der für die weiteren Prozeßschritte unbrauchbar ist. Ein einmal auf den Glasmaster geschriebener Fehler, hervorgerufen durch unkorrigierbare Bitfehler oder eine Unterbrechung des Datenstromes, kann nicht im gleichen Arbeitsgang korrigiert werden. Wurden solche unkorrigierbaren Fehler erkannt, muß der Vorgang abgebrochen und der gesamte Masteringprozeß wiederholt werden.

Fehlerfrei belichtete Glasmaster werden entwickelt, mit einer dünnen Metallschicht versehen und den nachfolgenden Galvanikprozessen zur Verfügung gestellt.

Die für den Masteringvorgang verwendeten Überspielmedien werden anschließend im allgemeinen von den CD-Werken für den Fall weiterer Masteringaufträge in manuell verwalteten Archiven abgelegt.

### II) Nachteile des Standes der Technik

Selbst bei Verwendung von Überspielmedien, die innerhalb der Bandbreite branchenüblicher Musik-/Datenträger eine vergleichsweise hohe Lese- und Schreibgeschwindigkeit aufweisen (CD-WO, MO-Discs, Exabytebänder) sind die erzielbaren Datenraten von derzeit ca. 3,5 Mbit/sec. verglichen mit den technisch-physikalischen Möglichkeiten der verwendeten Laser-Beam-Recorder (ca. 25 Mbit/sec) gering. Überspielmedien wie Exabyte- oder CD-Laufwerke nutzen daher die vorhandene Leistungsfähigkeit der Laser-Beam-Recorder nur zu einem Bruchteil aus.

Um die im Vergleich zu Musik-/Datenträger-Laufwerken ungleich höheren Investitions- und laufenden Kosten für Laser-Beam-Recorder zu amortisieren, möchten CD-Werke die Leistungsfähigkeit vorhandener Laser-Beam-Recorder vollständig ausschöpfen. Da jeder unkorrigierbare Fehler unweigerlich zu einer kompletten Prozeßwiederhoiung führt (aufgrund der geschilderten, erforderlichen Schritte ein kosten- und zeitaufwendiger Faktor) müssen unkorrigierbare Fehler der Lesegeräte und Überspielmedien, Bedienungsfehler des Personals sowie unkorrigierbare Bitfehler auf der Übertragungsstrecke vermieden werden. Die eingebauten Sicherheitsmechanismen bei CD-WO, MO-Disc oder Exabytebändern erzielen zwar im Vergleich zu anderen branchenüblichen Musik/Datenträgern und Lesegeräten höhere Datenraten und Übertragungssicherheiten, arbeiten dabei aber an der oberen Grenze ihrer Leistungsfähigkeit. Da ein wesentlicher Sicherheitsmechanismus im wiederholten Lesen (Re-Read) fehlerhafter Stellen besteht, muß zur Gewährleistung eines ununterbrochenen Mindestdatenstromes die Spitzendatenrate der Lesegeräte wesentlich höher sein, als die im Durchschnitt erforderliche. Nur durch dieses asynchrone schnelle Lesen, das erneute Lesen im Fehlerfall und das Zwischenpuffern eines Teiles des Datenstromes ist eine relativ hohe Betriebssicherheit gewährleistet. Da die Wahrscheinlichkeit des Auftretens von Lesefehlern jedoch mit der Geschwindigkeit des Lesevorganges überproportional ansteigt, ist die bei heute üblicherweise im Mastering verwendeten Lesegeräten eingesetzte Technik ein Kompromiß zwischen Prozeßstabilität und Schnelligkeit. Aus den oben genannten Gründen wird der Prozeßstabilität dabei eindeutig der Vorrang vor der Schnelligkeit gegeben.

Alle derzeitigen Überspielvorgänge von Nutzinformationen auf den Glasmaster werden mit Hilfe der genannten physikalischen Überspielmedien ausgeführt. Die rechtzeitige Zurverfügungstellung der Überspielmedien, die gemäß Arbeitsvorgabe richtige Reihenfolge der zu erledigenden Aufträge, das Einlegen der Überspielmedien in die entsprechenden Lesegeräte und der Start der Überspielungen ist manuell durch entsprechend geschultes Personal sicherzustellen. Die Gefahr von Auftragsverwechslungen, Bedienungsfehlern oder verspäteten Masteringstarts ist daher immer gegeben. Zusätzlich ist aufgrund der Gefahr von Prozeßunterbrechungen durch aufgetretene Fehler geschultes Personal auch während des gesamten Überspielvorganges erforderlich. Weitere Automatisierungen der beschriebenen Prozeßschritte sind daher mit der heute angewandten Technologie und Infrastruktur nur schwer oder gar nicht möglich.

Sofern im Premasteringbereich des CD-Werkes eine Bearbeitung der angelieferten Musik-/Datenträger notwendig war oder der verwendete Musik/Datenträgertyp aufgrund nicht ausreichender Leistungswerte für das Mastering unbrauchbar ist, werden die Nutz- und Steuerinformationen auf Musik-/Datenträger umkopiert, die eine möglichst hohe Lesegeschwindigkeit und Datensicherheit gewährleisten. Da die genannten Premasteringvorgänge meistens den Weg über die Festplatte(n) der Bearbeitungssysteme erfordern, ist somit vor dem eigentlichen Masteringprozeß ein zweifacher Kopiervorgang notwendig (Kopie des Musik-/Datenträgers auf Festplatte, von dort Kopie auf das Überspielmedium). Aufgrund der geringen Leistungswerte bezüglich Datenübertragungsrate bzw. Datensicherheit und der geforderten bitgenauen und fehlerfreien Übertragung geschieht der Lese- und Schreibprozeß außerdem mit einer relativ langsamen Geschwindigkeit im Vergleich zum späteren Masteringvörgang. Jeder zusätzliche Bearbeitungsschritt oder Kopierprozeß erhöht die Wahrscheinlichkeit des Auftretens unkorrigierbarer Fehler. Einer schnellen und sicheren Auftragsabwicklung innerhalb des CD-Werkes sind daher nach dem heutigen Stand der Technik enge Grenzen gesetzt.

Beim Aufkommen neuer CD-Formate (z.B. Mehrkanalaudio, Digitale Videodisc, Audio mit höheren Abtastfrequenzen oder Auflösungen pro Abtastwert) müssen sowohl im Premastering-, als auch im Masteringbereich neue Einspielgeräte angeschafft und an die vorhandenen Laser-Beam-Recorder bzw. Kontroll- und Bearbeitungsstationen angeschlossen werden. Dieses erfordert sowohl Investitionskosten in zusätzliche Hardware/Software, als auch höhere laufende Kosten für die Hardware- und Softwarewartung, die Release-Pflege und die erforderliche Weiterbildung des Personals. Zusätzlich sind mit jedem Aufkommen neuer CD-Formate im Premasteringbereich neue Formatwandlungen verbunden, die entsprechende Investitionen in den vorzuhaltenden Gerätepark nach sich ziehen.

Die an den Laser-Beam-Recordern eingesetzten Lesegeräte sind aufgrund der im Mastering hinsichtlich Datenübertragungsrate und Datensicherheit geforderten Anforderungen Sonderlösungen mit entsprechend geringen Stückzahlen und damit hohen finanziellen Anfangsinvestitionen sowie laufenden Kosten.

Zusätzlich ist das Auftreten neuer CD-Formate in der Zukunft gekoppelt mit der Forderung nach Datenträgern, die die erforderlichen Speicherkapazitäten von mehreren Gigabyte preisgünstig auf möglichst einem einzigen Träger zur Verfügung stellen und gleichzeitig eine hohe Lese-/Schreibdatenrate für den Bearbeitungs- und Kopiervorgang ermöglichen. Die heute benutzten Musik-/Datenträger können die geforderten Leistungsmerkmale nicht erfüllen, eine vollständige Neuinvestition bei CD-Werken ist sowohl im Premastering- als auch im Masteringbereich notwendig.

Da jede einzelne Musik-/Datenträgerart ihre charakteristischen Eigenschaften aufweist, ist derzeit sowohl spezielles Wissen über die mechanische Handhabung als auch deren logischen Aufbau erforderlich. Die gleichen Anforderungen treten hinsichtlich der verwendeten Hardware und Software bei den Lese-/Schreibgeräten sowie der Geräteinfrastruktur für die Formatwandlungen auf. Die Bedieneroberflächen, Ausstattungsmerkmale und Funktionalitäten der verwendeten Geräte weichen stark voneinander ab. Entsprechend geschultes Personal ist daher sowohl im Premastering für die Bearbeitung und Wandlung, als auch im Mastering für den Überspielvorgang auf die Glasplatten erforderlich.

Allen heute üblichen Einspielgeräten im Masteringbereich ist gemeinsam, daß sie keine oder nur eingeschränkte Möglichkeiten der automatisierten Diagnose und Fernwartung bereitstellen.

### III) Aufgabenstellung

Ein Ziel der Erfindung besteht darin, die Schnelligkeit der genannten Prozeßabläufe zu erhöhen. Dieses bezieht sich einerseits auf die Angleichung der Übertragungsgeschwindigkeiten von Überspielmedien an die technisch-physikalischen Möglichkeiten der vorhandenen Laser-Beam-Recorder, andererseits auf die Verkürzung oder den Wegfall der erforderlichen Formatwandlungen im Premasteringbereich. Die Erfindung soll derart ausbaubar sein, daß für eine Übergangsphase sowohl herkömmliche als auch neue Arbeitsabläufe nebeneinander möglich sind. Zusätzlich ist gefordert, daß die Erfindung die Gesamtstabilität und Fehlersicherheit der Arbeitsabläufe erhöht.

Ein weiteres Ziel der Erfindung ist es, zukünftige Entwicklungen bei optischen Speichermedien (z.B. neu erscheinende CD-Formate mit erhöhten Anforderungen an Übertragungsbandbreiten und Speicherkapazitäten) einfach und formatneutral einbinden zu können. Neuinvestitionen sollten dafür möglichst nicht oder nur in geringem Umfang anfallen.

Weiterhin soll die Erfindung die Anbindung an automatisierte Produktionssteuerungssysteme ermöglichen, um den heute dafür notwendigen manuellen Aufwand zu verringern.

Ein letztes Ziel der Erfindung besteht darin, die eingesetzten Komponenten derart modular zu gestalten, daß sie ein hohes Maß an Flexibilität und Skalierbarkeit aufweisen. Die Lösung soll gleichermaßen für kleine und große CD-Werke einsetzbar sein und zukünftig zu erwartende Erweiterungen auf einfache Art ermöglichen.

### IV) Lösung der Aufgabe:

Diese Aufgaben sind erfindungsgemäß durch ein System mit den im kennzeichnenden Teil des Anspruches 1 angegebenen Merkmalen und durch ein Verfahren mit den im kennzeichnenden Teil des Anspruches 5 angegebenen Schritten gelöst.

Das Netzwerk übernimmt dabei die Funktion der heute verwendeten Überspielmedien mit dem Vorteil, daß die standardmäßig bereitgestellten Übertragungsgeschwindigkeiten bei 10 Mbit/sec. bis 100 MBit/sec. und darüber liegen. Je nach Netztyp und der Auslegung seines Aufbaus können diese Datenraten sowohl im Burstmodus als auch kontinuierlich bereitgestellt werden. Da jeder übertragene Datenblock innerhalb des Netzes protokolliert und auftretende Bitfehler erkannt und korrigiert werden, ist eine außerordentlich hohe Datensicherheit gegeben. Die bereitgestellten Übertragungsraten der Netzwerke liegen weiterhin wesentlich über den im Durchschnitt von Laser-Beam-Recordem benötigten Datenraten. Die von Netzwarkprotokollen im Fehlerfall ausgeführten Korrekturprozesse für auf der Übertragungsstrecke aufgetretene Bitfehler verringern die durchschnittliche Übertragungsgeschwindigkeit der Netzwerke so wenig, daß eine ausreichende Leistungsreserve zu den von Laser-Beam-Recordern geforderten Mindestdatenraten verbleibt. Bei der Wahl des Netzwerktypes, seines Aufbaus, der physikalischen Übertragungswege und des Transportprotokolls existieren keine Einschränkungen durch die im CD-Werk bereits vorhandene Ausstattung, so daß die Auslegung den individuellen Erfordernissen entsprechend gestaltet werden kann.

Als Massenspeicher kann jede Art onlinefähigen Speichers genutzt werden. Die auf dem Markt verfügbare Bandbreite an Lösungen reicht von einfachen PCs mit wenigen Gigabyte Festplattenkapazität über die Zusammenfassung vieler, sich gegenseitig überwachender Festplatten mit Redundanz (RAID-Arrays) bis hin zu großen MO-Disc- oder automatischen Bandarchiven (Tape-Libraries), die mehrere Hundert Terabyte an Datenvolumen aufnehmen können. Im allgemeinen wird hier aus Leistungs- und Kostenerwägungen heraus eine Mischform eingesetzt werden, die relativ langsame aber hochkapazitive Libraries für die Langzeitarchivierung mit geringkapazitiven aber dafür schnellen Festplatten oder RAID-Arrays für den kurzfristigen Zugriff kombiniert. Für den kurzfristigen Zugriff vorgehaltene Massenspeicher können sowohl als zentrale Einheiten im Netzwerk existieren, oder auch sich verteilt direkt vor dem jeweiligen Laser-Beam-Recorder bzw. LBR-Interface befinden. Aus zentralen Massenspeichern werden die zum Masteringprozeß benötigten Dateien im allgemeinen vom LBR-Interface als ununterbrochener Datenstrom abgerufen. Bei verteilt vorgehaltenen Massenspeichern vor den LBR-Interfaces werden zunächst alle Nutz- und Steuerinformationen im Burstmodus aus den Langzeitspeichern in den dezentralen Speicher transferiert. Anschließend werden die Daten von dort aus während des Masteringvorganges vom LBR-Interface fortlaufend abgerufen. Alle für den Masteringprozeß fertig erstellten Nutz- und Steuerinformationen befinden sich je nach Speicherarchitektur und dem aktuellen Zustand des Masteringvorganges entweder auf den Langzeit- oder den Kurzzeitspeichern.

Durch die Verwendung eines auf Einzeldateien basierenden Aufbaus der Nutz- und Steuerinformationen, sind sowohl für das Netzwerk als auch für die Massenspeicher keinerlei Kenntnisse über den inneren Aufbau dieser Dateien notwendig, die angestrebte formatunabhängige Einbindung und Erweiterbarkeit ist somit gegeben. Lediglich im Premasteringbereich oder allgemein an den Stellen, an denen die von Kunden angelieferten Nutzinformationen das erste Mal auf die im Netz vorhandenen Massenspeicher kopiert werden, müssen formatabhängige Lesegeräte vorgehalten werden.

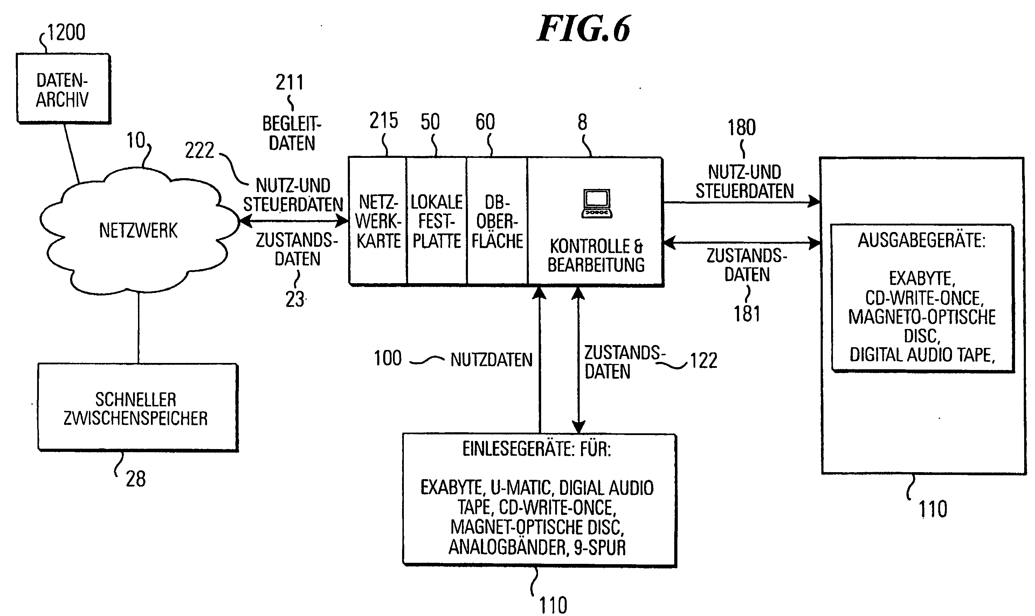

Die an das CD-Werk angelieferten Nutzinformationen werden mittels der Kontroll- oder Bearbeitungsstationen wahlweise entweder auf die lokale Festplatte oder direkt auf einen oder mehrere im Netzwerk befindliche Massenspeicher (vorzugsweise Kurzzeitspeicher) übertragen. Da heutige Kontroll- und Bearbeitungssysteme meistens noch nicht in der Lage sind, Daten direkt auf einer Netzwerkplatte zu bearbeiten, ist der Übertragung auf die lokale Festplatte des Bearbeitungssystemes zur Zeit der Vorzug zu geben. Im Gegensatz zu dem heutigen Ablauf werden die Nutz- und Steuerinformationen nach ihrer Fertigstellung nicht mehr auf ein Überspielmedium kopiert, sondern direkt aus der Festplatte heraus über das Netzwerk auf einen oder mehrere Kurzzeitspeicher übertragen (Siehe Figur 6). Im Vergleich zum Kopierprozeß auf Überspielmedien wie CD-WO, MO-Disc oder Exabyte-Bänder (ca. 3,5Mbit/sec.) geschieht dieses mit der wesentlich höheren Übertragungsgeschwindigkeit der verwendeten Festplatten (ca. 8Mbit/sec.).

Zukünftig werden die Bearbeitungsstationen in der Lage sein, die Bearbeitung der Nutzinformationen und das Erstellen der Steuerinformationen direkt auf den Massenspeichern (Kurzzeitspeichern) vorzunehmen. Der Kopierprozeß der von Kunden angelieferten Nutzinformationen auf diese Kurzzeitspeicher kann dann über entsprechende Geräte (z.B. Jukeboxen) als automatisierter Stapelverarbeitungsprozeß ausgelegt werden, so daß eine große Anzahl gleichförmiger Musik-/Datenträger ohne manuelle Beaufsichtigung eingespielt werden kann. Durch diese Maßnahme ist es möglich, die Einspielprozesse von den Bearbeitungsprozessen räumlich und zeitlich zu entkoppeln. Die Bearbeitung bzw. Erstellung der Nutz- und Steuerinformationen wird anschließend auf den Kurzzeitspeichern ausgeführt. Die erstellten Daten verbleiben auf den Kurzzeitspeichern oder können mit Hilfe der Datenflußsteuerung auf einen Langzeitspeicher ausgelagert werden.
Neben der Software für die Ausführung von Kontroll- und Bearbeitungsschritten ist auf den Bearbeitungsstationen eine Datenbankoberfläche (Datenbankfrontend) installiert, mit dessen Hilfe die Verknüpfung zwischen Nutz- und Steuerinformationen und den in der Datenbank diesen Informationen zugeordneten Begleitdaten ermöglicht wird. Als Begleitdaten werden an dieser Stelle im allgemeinen eindeutige Kennungen für jeden einzelnen logisch zusammengehörenden Block von Nutzinformationen vergeben (z.B. Titel, standardisierte internationale Aufnahmekennung (International Standard Recording Code, ISRC), Interpret, Spielzeit, firmeneigene Kennungen usw.) um später für den Masteringprozeß eindeutig auf die zugehörigen Nutz- und Steuerinformationen verweisen zu können. Die Eingabe der Begleitdaten ist jedoch nicht auf die oben genannten Angaben beschränkt, sondern kann im Prinzip jede beliebige Zusatzinformation beinhalten.

Das Vorhalten aller für den Masteringvorgang notwendigen Nutz- und Steuerinformationen auf den an das Netzwerk angeschlossenen Massenspeichern gewährleistet, daß für jeden Laser-Beam-Recorder eine ausreichend hohe Anzahl zu fertigender Aufträge fertig vorbereitet vorgehalten wird und jederzeit an die Laser-Beam-Recorder übertragen werden kann. Damit ist zum einen bei entsprechender Datenflußsteuerung eine fortlaufende Versorgung der Laser-Beam-Recorder mit Aufträgen gewährleistet, zum anderen kann jeder Laser-Beam-Recorder aufgrund der hohen Übertragungsgeschwindigkeiten des Netzwerkes dauerhaft mit seiner Höchstgeschwindigkeit arbeiten. Die Grenzen der Datenübertragungsgeschwindigkeiten auf den Glasmaster sind mit diesem Ansatz nicht durch das Netzwerk bedingt, sondern durch die maximale Geschwindigkeit des verwendeten Laser-Beam-Recorders vorgegeben.

Die Kontrolle aller für einen bestimmten Masteringvorgang benötigten Nutzund Steuerinformationen, ihre termingerechte Bereitstellung auf den Kurzzeitspeichern, die Flußsteuerung der Nutz- und Steuerinformationen zu den Laser-Beam-Recordem sowie die Erzeugung von Zustandsmeldungen über den Masteringvorgang wird mit Hilfe einer im folgenden "Mastering-Controller" genannten Software durchgeführt. Der Mastering-Controller ist weiterhin dafür verantwortlich, daß ein Mischbetrieb aus Masteringvorgängen über das Netzwerk, als auch über die physikalischen Überspielmedien ausgeführt werden kann. Im Falle der Überspielung über das Netzwerk steuert der Mastering Controller vollautomatisch den gesamten Masteringvorgang und stellt Zustandsmeldungen auf einem dazugehörigen Bildschirm sowie gegebenenfalls Prozeßabläufe für den Fehlerfall zur Verfügung.

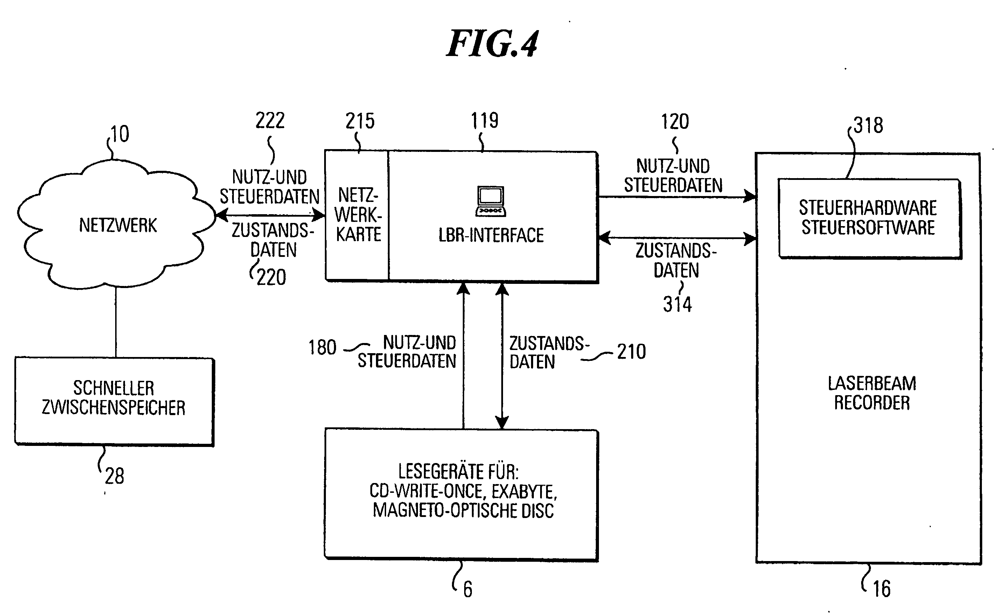

Durch Erweiterung um die Netzwerkfähigkeit besitzen die an den Laser-Beam-Recorder angeschlossenen LBR-Interfaces die Möglichkeit, sowohl Masteringvorgänge von physikalischen Überspielmedien als auch Masteringvorgänge über das Netzwerk zu verarbeiten (Siehe Figur 4). Alle wichtigen Zustandsmeldungen über den Verlauf des Masteringvorganges werden an den Mastering Controller weitergeleitet, dort analysiert und in entsprechende Reaktionen umgesetzt.

Aufgabe der Datenbank ist es, für jede auf den Massenspeichern des Netzwerkes abgelegte, in sich geschlossene Menge von Nutz- oder Steuerinformationen (im allgemeinen eine bestimmte Anzahl logisch zusammengehörender Dateien) geeignete Begleitdaten und Verweise auf die Nutz- und Steuerinformationen zu verwalten und die eindeutige Verknüpfung zwischen Begleitdaten und den zugehörigen Dateien der Nutzoder Steuerinformationen sowie die Verweise auf den Speicherort der Nutzund Steuerinformationen unter allen Betriebsbedingungen zu gewährleisten. Auf Veranlassung des Mastering-Controllers stellt die Datenbank im Vorfeld eines Masteringvorganges mit Hilfe der Verweise fest, welche Dateien dem jeweiligen Auftrag zugeordnet sind, bzw. auf welchen Speichern sie sich befinden. Der Mastering-Controller setzt die erhaltenen Angaben in eine festgelegte Reihenfolge von Reaktionen vor, während und nach dem Masteringvorgang um.

Aufgrund der vollautomatischen Steuerung des Masterings durch den Mastering Controller ist es möglich, zusätzlich vorhandene Produktionssteuerungssysteme der CD-Werke elektronisch anzubinden und die dort abgelegten Angaben über z.B. Auftragsmengen, die Auftragsreihenfolge und ihre Zuweisung zu Laser-Beam-Recordern automatisiert in entsprechende Masteringarbeitsabläufe umzusetzen.

Bedingt durch die offene Struktur, sowie der Verwendung einheitlicher Schnittstellen und Komponenten erlaubt das beschriebene Konzept jederzeit individuelle Änderungen und Erweiterungen gemäß der aktuellen Bedürfnisse der CD-Werke.

### V) Vorteile

Die nach heutigem Stand der Technik im lokalen- und Weitverkehrsbereich (LAN, WAN) eingesetzten Netzwerktypen (Ethemet, FDDI, Token Ring, 100VG-AnyLAN, etc. ) stellen sowohl als "shared medium" und erst recht als "dedizierte Verbindung" Datenraten zur Verfügung, die gleich groß oder sogar weit höher sind als diejenigen, die von Laser-Beam-Recordern physikalisch-technisch verarbeitet werden können. Die Verwendung solcher Netzwerke als Trägermedium für die Überspielung der Nutz- und Steuerinformationen gewährleistet, daß die verfügbare Übertragungskapazität der Laser-Beam-Recorder vollständig ausgenutzt werden kann. Die fortschreitende Entwicklung auf diesem Gebiet gewährleistet zudem auf absehbare Zukunft eine ausreichende Leistungsreserve gegenüber den von Laser-Beam-Recordern verarbeitbaren Übertragungsraten.

Die Verwendung entsprechender Netzwerkprotokolle gewährleistet Datensicherheiten (Bitfehlerraten) von ca. 10-15. Damit sind die verfügbaren Netzwerkverbindungen um mehr als den Faktor 100 sicherer, als die heute an den Laser-Beam-Recordern eingesetzten Lesegeräte. Bitfehler beim Datentransfer auf den Glasmaster, hervorgerufen durch Fehler auf der Übertragungsstrecke zwischen Kurzzeitspeicher und Laser-Beam-Recorder sind daher weitgehend ausgeschlossen. Aufgrund der weltweit hohen Verbreitung von Netzwerken und der darauf eingesetzten Übertragungsprotokolle sind die existierenden Hardware- und Softwarekomponenten technologisch ausgereift, sowie aufgrund der Serienfertigung kostengünstig einzukaufen.

Die Verwendung eines Standardnetzwerkes ermöglicht außerdem, bereits auf der Festplatte des Bearbeitungs- oder Kontrollsystemes im Premasteringbereich vorhandene Nutz- und Steuerinformationen dem Laser-Beam-Recorder ohne Zeitverzögerung zur Verfügung zu stellen. Im Falle zeitkritischer Aufträge kann daher direkt nach der vollständigen Vorverarbeitung mit dem Masteringprozeß begonnen werden. Das CD-Werk ist damit in der Lage, sehr flexibel auf die unterschiedlichsten Auslastungssituationen zu reagieren und seine Durchlaufzeiten zu verringern.

Die heute noch notwendigen Kopierprozesse auf physikalische Überspielmedien werden vollständig eingespart. Die im Premasteringbereich des CD-Werkes notwendigen Vorarbeiten reduzieren sich dadurch zeitlich um ca. 25%.

Die Überspielung der Nutz- und Steuerinformationen auf onlinefähige Massenspeicher im Netzwerk ermöglicht, diese Daten dauerhaft aufzubewahren. Im Fall von Wiederholungen des gleichen Masteringvorganges fallen keine weiteren Tätigkeiten an, der Mastering-Controller übernimmt vollständig die Steuerung und Prozeßabwicklung.

Im Gegensatz zu heutigen, physikalischen Musik-/Datenträgern ermöglicht die Verwendung elektronisch verwaltbarer Langzeitspeicher im Netzwerk aufgrund der dort standardmäßig verfügbaren Prüfungsroutinen vollautomatische Fehlerprüfungen und gegebenenfalls Korrekturen der gespeicherten Daten. Heute dafür aufzuwendende, manuelle Tätigkeiten für die Archivierung und Pflege der Überspielmedien entfallen.

Weiterhin bietet die Verknüpfung von Nutz- und Steuerinformationen mit den in der Datenbank gespeicherten Begleitinformationen die Möglichkeit, Auskunftssysteme für zukünftige Audioanwendungen wie Musik auf Abruf ("Musik on Demand"), Digitalen Hörrundfunk ("Digital Audio Broadcasting"), Digitales Fernsehen ("Digital Video Broadcasting") etc. aufzubauen.
Die verallgemeinerte Struktur aus Einlesestation (hier Kontroll- und Bearbeitungsstation), Kurzzeit- und Langzeitspeichern, Produktionsstation (hier Laser-Beam-Recorder) sowie den zugehörigen Steuereinheiten wie Produktions-Controller (hier Mastering-Controller) kann ohne weitere Änderungen des Aufbaus ebenso in verschiedenen anderen Bereichen der Medienindustrie Anwendung finden. Exemplarisch seien hier Rundfunk- und Fernsehanstalten, Audiostudios und die Druckindustrie genannt. Lediglich hinsichtlich der Aufgabenstellungen und Hardware- bzw. Softwareauslegung können Abweichungen bestehen.

Werden die im CD-Werk aufbereiteten Nutz- und Steuerinformationen auf elektronisch zugänglichen Archivmedien abgelegt (Dateiverwaltungsrechner, RAID-Array, automatisches Bandarchiv (Tape-Library), automatisches MO-Disc-Archiv (MO-Disc-Library)) sind mit Hilfe von Steuerungs- und Stapelverarbeitungssoftware die jeweils anfallenden Masteringaufträge vollständig automatisch steuerbar und können ebenfalls automatisch den jeweils freien Laser-Beam-Recordern zugeordnet werden. Durch den Wegfall dieser sonst manuell auszuführenden Tätigkeiten sind Verwechslungen der Auftragsreihenfolge, Fehler bei dem Start des Masteringvorganges oder sonstige Bedienungsfehler ausgeschlossen.

Die Verwendung von Standardkomponenten der PC- und Netzwerkindustrie gewährleistet eine fortlaufende Weiterentwicklung, da die entsprechenden Bauteile in großen Stückzahlen auch in anderen Bereichen eingesetzt werden. Darüber hinaus ziehen die in diesem Markt üblichen Leistungssteigerungen bei Datenübertragungsraten und Speicherkapazitäten ein auf Dauer günstiges Preis-/Leistungsverhältnis nach sich. Im Falle der Aufrüstung, des Ersatzes oder der Neuanschaffung sind somit im Vergleich zu den Sonderlösungen bei heute verwendeten Bauteilen und Geräten im Masteringbereich geringere Kosten notwendig.

Weiterentwicklungen hinsichtlich der von Laser-Beam-Recordern zur Verfügung gestellten Übertragungsgeschwindigkeit auf die Glasmaster werden auf lange Zeit von den vorhandenen Netzwerken unterstützt, ohne daß aus diesem Grund weitere infrastrukturelle Maßnahmen getroffen werden müssen. Die Gesamtleistungsfähigkeit des Masteringbereiches wird in Zukunft alleine durch Weiterentwicklungen bei den Laser-Beam-Recordern bestimmt. Daraus resultierende Neuanschaffungen oder Ergänzungen beschränken sich daher weitgehend auf die Laser-Beam-Recorder selber.

Die besonders in der CD-Industrie vorhandene Dynamik hinsichtlich des Aufkommens neuer Speicherformate erforderte bisher bei jedem neuen Format eine Investition in Laufwerke, die die neuen Formate unterstützen (Kontroll- und Bearbeitungsstationen, Formatwandlungsstationen, Einspielgeräte an den Laser-Beam-Recordern). Das Netzwerk als Überspielmedium arbeitet transparent (formatneutral), da lediglich Dateien übertragen werden müssen. Kenntnisse über deren inneren Aufbau sind für die Übertragung über das Netzwerk nicht notwendig. Neue Formate können daher unabhängig von ihrem inneren Aufbau und der dahinterliegenden Speicherkapazität übertragen werden. Durch die Ersetzung der physikalischen Überspielmedien durch ein bereichsübergreifendes Netzwerk sind Neuanschaffungen bei dem Aufkommen neuer Formate auf den Premasteringbereich beschränkt und dort auch nur auf den Einspielbereich (Einspielen der Formate auf den Dateiverwaltungsrechner, RAID-Array, Tape-Library, MO-Disc-Library etc.). Es wird keine Ausstattung für die Formatwandlungen mehr benötigt.

Die Vernetzung des Premastering- und Masteringbereiches hat zur Folge, daß die zur Handhabung der unterschiedlichsten Formate benötigten Mensch-Maschine-Schnittstellen einheitlich gestaltet werden können. Dieses verringert einerseits den erforderlichen Schulungsaufwand des Personals und führt andererseits zu der Möglichkeit, vorhandenes Personal flexibel an verschiedenen Stellen einsetzen zu können.

Die Verwendung moderner Multitasking-Betriebssysteme auf den lokalen PCs oder Workstations ermöglicht den Benutzern, fertig bearbeitete Nutzund Steuerinformationen als Hintergrundaufgabe auf die Zwischen- oder Langzeitspeicher zu übertragen, während im Vordergrund bereits mit der nächsten Bearbeitung begonnen wird. Die Leistungsfähigkeit der Bearbeitungsstationen steigt daher deutlich an.
Die Einbindung onlinefähiger Archivmedien (Dateiverwaltungsrechner, Tape-Library, MO-Disc-Library, etc.) ist aufgrund der offenen Struktur je nach Größe und Anforderung des CD-Werkes in unterschiedlichsten Kombinationen und Ausbaustufen möglich. Erweiterungen aufgrund erhöhter Anforderungen an die Speicherkapazität können sowohl durch zusätzliche Speichereinheiten, als auch durch Aufrüstung der vorhandenen Speichereinheiten vorgenommen werden.

Aufgrund seiner Auslegung gestattet der Mastering Controller die gleichzeitige Verwaltung mehrerer Laser-Beam-Recorder bzw. LBR-Interfaces.

Die Verwaltung und Wartung von Netzwerken und der angeschlossenen Komponenten können ferngesteuert ausgeführt werden. Außerdem sind gegenüber heutigen Wartungen wesentlich ausführlichere Diagnosen, sowie automatisierte Wartungsläufe und Fehleralarme möglich.

Die von Kunden bei CD-Werken zur Vervielfältigung in Auftrag gegebenen Nutzinformationen werden in zunehmenden Maße auf festplattenbasierenden Aufnahmesystemen erstellt und anschließend nur für den Versand zum CD-Werk auf einen Musik-/Datenträger übertragen. Eine solche Übertragung bzw. Wandlung wird mit dem Aufkommen preisgünstiger, hochratiger Übertragungsstrecken der Telekommunikation in der Zukunft entfallen können. Die trägerlose Weiterverarbeitung im CD-Werk wird damit ermöglicht, die heute noch erforderliche Einspielung der angelieferten Musik-/Datenträger auf die Festplatten des Premasteringbereiches in Zukunft zugunsten der direkten Einspielung vom Kunden auf einen Dateiverwaltungsrechner des Premasteringbereiches entfallen.

### VI) Ausführungsbeispiel

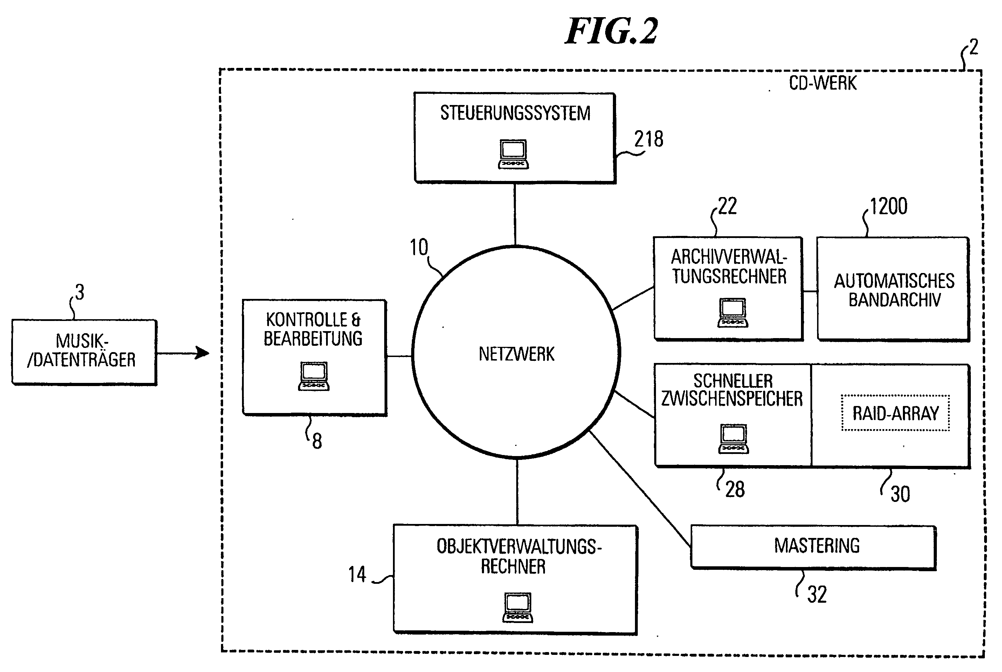

Eine Ausführungsform der geschilderten Erfindung ist beispielhaft in Figur 2 dargestellt.

**Allgemeines:** Das dargestellte Konzept beruht auf einer Client-Server-Architektur, TCP-IP als Netzwerkprotokoll und NFS als Netzwerkdateisystem. Für die kurzfristige Vorhaltung von Nutz- und Steuerinformationen für den Masteringbereich, das Einspielen der Dateien von den Kontroll- und Bearbeitungsstationen und die Zurverfügungstellung definierter Mindestdatenraten an die Laser-Beam-Recorder wird ein mit einem RAID-Array ausgestatteter, unter dem Betriebssystem UNIX laufender "schneller Zwischenspeicher" (Cache Server) eingesetzt. Als Langzeitarchiv zur Aufnahme fertig erstellter Nutz- und Steuerinformationen, die nicht sofort in dem Masteringbereich benötigt werden, wird ein mehrere Terabyte großes automatisiertes Bandarchiv (Tape Library) eingesetzt. Die Verwaltung der dort gespeicherten Inhalte wird durch eine für den jeweiligen Bandarchivtyp erhältliche Standardsoftware (Tape-Management Software) vorgenommen. Die Bandverwaltungssoftware ist auf einem unter dem Betriebssystem UNIX laufenden "Archivverwaltungsrecher" installiert. Alle im Netzwerk enthaltenen Massenspeicher sind in eine hierarchische Speicherverwaltung (Hierarchical Storage Management; HSM-Software) eingebunden, welche bewirkt, daß bei erkennbar unzureichenden Festplattenkapazitäten des schnellen Zwischenspeichers nicht mehr benötigte Dateien oder Dateien mit niedriger Wichtigkeit auf den Langzeitspeicher ausgelagert werden. Die Ein/Auslagerungsvorschriften und Grenzwerte zur Verschiebung der Dateien werden der Hierarchischen Speicherverwaltung vom Systemverwalter des Netzwerkes vorgegeben. Je nach zeitlich wechselnden Anforderungen des CD-Werkes können die Grenzwerte und Vorschriften dynamisch angepaßt werden. Neben der Organisation der Speicherverwaltung übernimmt die Bandverwaltungssoftware auch die gesamte Verwaltung der Speichermedien und die Ansteuerung der in dem Langzeitspeicher vorhandenen Roboter und Laufwerke. Die Benutzerverwaltung und den Zugriff auf die im Netzwerk übertragenen Dateien (bzw. die dahinter sich verbergenden Medienobjekte) gewährleistet ein unter dem Betriebsystem UNIX laufender "Objektverwaltungsrechner". Sämtliche Zugriffe auf Dateien und Datenübertragungen zu den anfordernden Rechner werden durch den Objektverwaltungsrechner angestoßen, sofern der anfordernde Rechner die entsprechende Nutzungsberechtigung aufweist. Der schnelle Zwischenspeicher sowie der Archivverwaltungsrechner bzw. Langzeitspeicher sind als logische Laufwerke des Netzwerkes eingebunden. Benutzeranfragen für zu übertragende Dateien können daher von allen angeschlossenen Speichereinheiten bedient werden. Lediglich aufgrund der unterschiedlichen Zugriffszeiten ist für den Benutzer erkennbar, ob die Daten von dem schnellen, aber kleinen Zwischenspeicher oder von dem langsameren, dafür großen Langzeitspeicher abgerufen werden.

**Objektverwaltungsrechner:** Die gesamte Verwaltung und der Zugriff auf die erzeugten Dateien wird von einem Objektverwaltungsrechner übernommen. Dazu gehört unter anderem die Verwaltung von Zugangsberechtigungen, die Einordnung der Nutzer in eine Nutzerhierarchie bzw. Nutzergruppen mit den damit verbundenen Rechten, Vorzügen und Pflichten, sowie die Bereitstellung von Funktionen zur eigenschaftsgesteuerten Suche der in Dateien abgelegten Nutz- und Steuerinformationen. Das Kernelement des Objektverwaltungsrechners ist eine relationale Datenbank, in der die Begleitdaten der Nutz- und Steuerinformationen abgelegt sind. Generell werden aufgrund der anfallenden Datenmengen Begleitdaten in der Datenbank abgelegt, während die Nutz- und Steuerinformationen in den Massenspeichern vorgehalten werden. Neben den Begleitdaten werden in der Datenbank zusätzlich Verweise auf die in den Massenspeichern gespeicherten Dateien gepflegt. Aufgabe der Datenbank ist es, für jede abgelegte Datei bzw. eine Anzahl logisch zusammengehörender Dateien die zugeordneten Begleitdaten und Verweise zu verwalten und die eindeutige Verknüpfung zwischen BegleitdatenNerweise und den Dateien unter allen Betriebsbedingungen zu gewährleisten. Die Datenbankstruktur beruht auf der Verwaltung von Medienobjekten, die für sich alleine oder als in sich geschachtelte Medienobjekte mit jeweils anhängenden Eigenschaften vorkommen.

Die gesamten Nutzinformationen liegen nach dem Einleseprozeß als fortlaufende Folge von Bytes in einer einzigen Datei vor. Um die Dateibehandlung zwischen den einzelnen im Netzwerk angeschlossenen Clients und Servern überschaubar zu halten und die Möglichkeit der Übertragung auch von Teilen der Nutzinformationen zu gewährleisten, können große Dateien in kleinere Einheiten zerlegt werden. Eine solche Unterteilung wird sinnvoll bei CD-Audio gemäß der Musikstückgrenzen vorgenommen. Die Beschreibung, an welchen Stellen der Datei Musikstückgrenzen vorhanden sind, wird dem die CD beschreibenden Protokoll (Disc-Description-Pratocol (DDP)) entnommen. Es ist die Aufgabe des Ojektverwaltungsrechners, diese Zerlegungen vorzunehmen, die daraus resultierenden Dateien logisch zusammenzuhalten und die zugehörigen Begleitdaten zu verwalten. Vor dem Masteringprozeß ist dieser Vorgang wieder rückgängig zu machen.

Jedes einzelne Musikstück einer Musik-CD wird als ein Medienobjekt angesehen. Die Verknüpfung zwischen Medienobjekten und den zugehörigen Eigenschaften geschieht während des Bearbeitungsprozesses/Einleseprozesses durch den Benutzer der Bearbeitungsstation. Auf Veranlassung des Mastering-Controllers stellt die Datenbank im Vorfeld eines Masteringvorganges mit Hilfe der Verweise fest, welche Medienobjekte bzw. Dateien dem jeweiligen Auftrag zugeordnet sind und auf welchen Massenspeichern und in welchen Netzwerkdateiverzeichnissen sie sich befinden. Der Mastering-Controller setzt die erhaltenen Angaben in eine festgelegte Reihenfolge von Reaktionen für die Steuerung des Masteringablaufes um.

**Kontroll- und Bearbeitungsstationen:** Die auf den von Kunden zur Vervielfältigung angelieferten Inhalte der Musik-/Datenträger werden auf die lokalen Festplatten der jeweiligen Bearbeitungsstation (PC oder Workstation) kopiert. Dort erfolgt auch die Bearbeitung der Inhalte und Hinzufügung der für den Masteringprozeß notwendigen Steuerinformationen (z.B. das Disc-Description-Protocol). Dieser Teil der Kontroll- und Bearbeitungsstationen ist formatabhängig und kann mit allen angeschlossenen Einlesegeräten kommunizieren. Bei Formatänderungen oder -erweiterungen ist dieser Teil der Kontroll- und Bearbeitungsstationen zu ergänzen und zu ändern.

Zusätzlich zu der für den Bearbeitungsprozeß notwendigen Software enthält jede Kontroll- und Bearbeitungsstation eine Datenbankoberfläche (Datenbankfrontend, Clientsoftware des Objektverwaltungsrechners), mit dessen Hilfe Begleitdaten (Eigenschaften) der Nutz- und Steuerinformationen hinzugefügt, aktualisiert oder verändert werden können. Die Speicherung der Nutz- und Steuerinformationen erfolgt dateibasierend in den Massenspeichern, die Speicherung der zugehörigen Eigenschaften innerhalb der Datenbank. Solche Eigenschaften können z.B. aufnahmespezifische Einträge wie "Spielzeiten", "Interpreten" und "Titel" sein, allgemeinerer Natur sein wie Klassifizierungen "Jazz", "Pop", "Techno", "Klassik" usw. oder firmeneigene Einträge des CD-Werkes umfassen wie "Inventarnummer", "Bandnummer" , "Bestellnummer" usw. Aufgrund des für diese Arbeitsabläufe notwendigen Austausches von Zustandsmeldungen und Steuerkommandos zwischen der Datenbankoberfläche und der Software zur Steuerung des Einleseprozesses, sind beide Teile durch eine Steuerschnittstelle untereinander verbunden.

Da nicht auszuschließen ist, daß sich Teile der einzulesenden Nutz- und Steuerinformationen bereits in den onlinefähigen Kurzzeit- oder Langzeitspeichern befinden, kann mit Hilfe des Datenbankoberfläche eine eigenschaftsgesteuerte Suche nach bereits vorhandenen Nutz- und Steuerinformationen im Vorfeld des Überspielprozesses auf die lokale Festplatte durchgeführt werden. Wurden Teile der Nutz- und Steuerinformationen bereits in früheren Bearbeitungsschritten eingespielt, können diese von den weiteren Einspiel- und Bearbeitungsschritten ausgeschlossen werden. Die Kontroll- und Bearbeitungsstation stellt daher auch die Möglichkeit zum Einlesen einzelner Teile der gesamten Nutz- und Steuerinformation für den Einleseprozeß zur Verfügung. Die Unterscheidung, ob Teile der Nutzinformationen bereits eingelesen wurden oder nicht, wird bei eingelesenen Musik-CD-WOs oder MO-Discs mit Hilfe von Quersummen der auf der CD gespeicherten Inhaltsangabe ("Table of Contents") und/oder der ebenfalls gespeicherten Europäischen Artikelnummer/Universeller Produkt Code (UPC/EAN-Code) durchgeführt. Um die eindeutige Zuordnung von eingelesenen Nutz- und Steuerinformationen zu den später stattfindenden Masteringprozessen durchführen zu können, ist zusätzlich die Eingabe einer Mindestmenge von Begleitinformationen vorgesehen und abzuprüfen. Im einfachsten Fall ist dieses eine Kombination aus "Titel" und "Interpret" oder "Titel" und "Spielzeit" oder eine firmeneigene Kennung. Jede andere Kennung oder Kombination aus Kennungen ist prinzipiell ebenso möglich. Zusätzlich ist eine Überprüfung der vom Benutzer eingegebenen Begleitdaten auf Semantik und innere Logik (Konsistenzprüfung) vorgesehen, um Fehleingaben in die Datenbank zu unterbinden. Eine Einspielung auch von Teilen der Nutz- und Steuerinformationen in die Massenspeicher wird erst dann freigegeben, wenn die Mindestmenge an Begleitinformationen vorliegt und die genannte Prüfung erfolgreich abgeschlossen wurde. Ohne eindeutige Kennungen ließen sich anderenfalls die eingespielten Nutz- und Steuerinformationen nicht mehr ordnungsgemäß verwalten.

Die während des Einspielprozesses auf die lokale Festplatte auflaufenden Zustandsmeldungen werden auf dem Bildschirm des PCs oder der Workstation ausgegeben. Wurden unkorrigierbare Fehler entdeckt, besteht die Möglichkeit, den Einleseprozeß abzubrechen und anschließend zu wiederholen. Die einmal eingegebenen Begleitdaten bleiben jedoch erhalten und müssen nicht erneut eingeben werden.

**Schneller Zwischenspeicher:** Die Aufgabe des schnellen Zwischenspeichers ist es, alle von den Bearbeitungsstationen eingespielten Nutz- und Steuerinformationen zwischenzuspeichern, sowie ausreichende Übertragungsgeschwindigkeit und Festplattenplatz für die zu masternden Aufträge vorzuhalten. In Verbindung mit der Hierarchischen Speicherverwaltung des Archivverwaltungsrechners sorgt der schnelle Zwischenspeicher weiterhin dafür, daß im Fall unzureichenden Festplattenplatzes eine Auslagerung derzeit nicht benötigter Dateien oder Dateien mit niedriger Wichtigkeit auf den Langzeitspeicher ausgeführt wird. Die bei diesem Prozeß verwendeten Vorschriften orientieren sich an der den verschiedenen im Netzwerk angeschlossenen Arbeitsstationen zugeordneten Wichtigkeit. Masteringprozesse und deren Anforderungen an Festplattenplatz auf dem schnellen Zwischenspeicher haben Vorrang vor Einspielprozessen der Kontroll- und Bearbeitungstationen. Um zu gewährleisten, daß eine ununterbrochene Versorgung der Laser-Beam-Recorder mit fertigen Aufträgen geschehen kann, ist neben dem derzeit abzuarbeitenden Auftrag pro angeschlossenem Laser-Beam-Recorder mindestens ein weiterer Auftrag mit allen Nutz- und Steuerinformationen auf dem schnellen Zwischenspeicher vorhanden. Um im Fall von Fehlern während des Masteringprozesses nicht zusätzliche Datenübertragungen aus den Langzeitspeichern vornehmen zu müssen, befindet sich zusätzlich noch der letzte, fertig gemasterte Auftrag auf dem schnellen Zwischenspeicher. Aufgrund der Anforderungen an die Übertragungsgeschwindigkeit und Ausfallsicherheit der von den Laser-Beam-Recordem geforderten Datenströme, die zeitgleich - anfallenden Einieseprozesse von Bearbeitungsstationen und das ebenfalls zeitgleiche Auslesen der Daten in den Langzeitspeicher hinein ist eine Ressourcenverwaltung integriert, welches alle angeforderten Datenströme untereinander abstimmt und gegebenenfalls diejenigen mit niedriger Wichtigkeit herunterfährt. Auch hier haben Masteringprozesse generell Vorrang vor allen anderen Einspielprozessen von Kontroll- und Bearbeitungsstationen oder Datenübertragungen in die Langzeitspeicher hinein.

Das auf dem schnellen Zwischenspeicher verwendete Netzwerkdateisystem gewährleistet, daß sein gesamter Inhalt als ein logisches Laufwerk mit Haupt- und Unterverzeichnissen im Netzwerk sichtbar ist. Sofern die hierarchische Speicherverwaltung die Überschreitung von Grenzen des freien, verfügbaren Festplattenplatzes erkennt, wird gemäß der vom Systemverwalter festgelegten Vorschriften und Grenzwerte durch Auslagerung von Dateien aus dem schnellen Zwischenspeicher in den Langzeitspeicher freier Festplattenplatz geschaffen.

**Archivverwaltungsrechner:** Die Aufgabe des Archivverwaltungsrechners ist es, alle eingespielten Nutz- und Steuerinformationen im Langzeitspeicher dauerhaft aufzubewahren sowie eine vorgegeben Anzahl von Sicherheitskopien dieser Informationen vorzuhalten. Zu den Strategien der dauerhaften Bewahrung der Informationen gehören einerseits die automatische, in festgelegten Abständen durchgeführte Qualitätskontrolle aller im Langzeitspeicher enthaltenen Speichermedien, die automatische Wiederherstellung der Nutz- und Steuerinformationen im Fehlerfall (Wiederherstellung mit Hilfe von Sicherheitskopien) und der Schutz der gespeicherten Informationen vor unberechtigten Zugriffen. Der Archivverwaltungsrechner wirkt aus Sicht der Clients bzw. des schnellen Zwischenspeichers als logisches Laufwerk mit nahezu unendlich großer Kapazität. Die Bereitstellung archivierter Nutz- und Steuerinformationen geschieht immer auf einem Server. (Archivverwaltungsrechner oder schneller Zwischenspeicher). Die anfordernden Clients können dort auf die Dateien direkt zugreifen oder eine Kopie auf Ihre lokale Festplatte laden, um z.B. eine Bearbeitung durchzuführen.

**Mastering Controller:** Der Mastering Controller übernimmt die Vorbereitung und anschließende Zustandskontrolle von Masteringprozessen. Die Reihenfolge der Aufträge wird dabei durch die Kopplung an ein Produktionssteuerungssystem vorgegeben. Die eindeutige Kennzeichnung der einem Masteringauftrag zugeordneten Dateien ist eine an den Bearbeitungsstationen für jeden Auftrag vergebene und in der Datenbank gespeicherte "Bandnummer".

Die Funktionalitäten des Mastering-Controllers sind in zwei Teile gegliedert: der erste Teil übernimmt die Vorbereitungsaufgaben wie das rechtzeitige Anfordern der Dateien eines Masteringauftrages aus dem Langzeitspeicher oder dem schnellen Zwischenspeicher und das anschließende Laden aller Nutz- und Steuerinformationen in ein bestimmtes, vom LBR-Interface erwartetes Netzwerkdateiverzeichnis. Die Verteilung von Aufträgen auf die Laser-Beam-Recorder wird ebenfalls von diesem Teil des Mastering Controllers gesteuert, kann jedoch für Sonderanfertigungen oder außergewöhnliche Betriebssituationen manuell vorgenommen werden. Der zweite Teil steuert den Masteringablauf und stellt alle wichtigen Zustandsmeldungen des Masteringverlaufes auf einem Bildschirm zur Verfügung. Durch die Erweiterung des LBR-Interfaces um die Netzwerkfähigkeit können sowohl Aufträge über das Netzwerk, als auch Aufträge über physikalische Überspielmedien durchgeführt werden. Der Mastering Controller unterstützt beide Arten von Mastering-Prozessen.

Durch die Teilung der Aufgabenbereiche in zwei voneinander unabhängige Softwarekomponenten, ist es möglich, den für die Vorbereitung notwendigen Anteil von der reinen Masteringsteuerung zu trennen. Beide Anteile laufen entweder auf einer Workstation oder können auch auf zwei in unterschiedlichen Räumen aufgestellten Maschinen installiert sein. Durch diese Teilung kann die Struktur den unterschiedlichen Arbeitsabläufen und Bedürfnissen von CD-Werken angepaßt werden.

Der Anstoß zur Vorbereitung des Masteringprozesses wird durch die Übersendung der Kennung "Bandnummer XYZ" an den Mastering Controller ausgelöst. Der Mastering-Controller übernimmt diese Kennung und fügt sie der Warteschlange eines Laser-Beam-Recorder hinzu. Der Status der Warteschlange wird auf dem Bildschirm des Mastering-Controller angezeigt.

Basierend auf der Kennung "Bandnummer XYZ" fordert der Mastering-Controller die zugehörigen Dateien vom Ojektverwaltungsrechner an und übergibt gleichzeitig den Namen der Netzwerkplatte und des Netzwerkdateiverzeichnisses auf dem schnellen Zwischenspeicher, in den die Dateien geschrieben werden sollen. Der Objektverwaltungsrechner sucht in der Datenbank die Verweise auf die zugehörigen Dateien, fordert sie vom Archivverwaltungsrechner an und lädt sie in das gewünschte Netzwerkdateiverzeichnis. Alle wichtigen Zustandsmeldungen zwischen dem Objektverwaltungsrechner und dem Mastering-Controller über den Verlauf des Anforderungsvorganges und seiner Ergebnisse werden ausgetauscht. Der Mastering Controller ist verantwortlich dafür, daß die angeforderten Dateien rechtzeitig zum Start des Masteringprozesses vorhanden sind und sich auf dem richtigen logischen Laufwerk bzw. vom LBR-Interface erwarteten Netzwerkdateiverzeichnis befinden.

Um einen Masteringauftrag zu starten hat der Mastering-Controller die folgenden Vorgänge durchzuführen:
- Feststellung des Vorhandenseins und Überprüfung aller zu dem Masteringauftrag gehörigen Dateien
- Überprüfung, daß der angegebene Netzwerkpfad eingehalten wurde
- Übergabe der Startmeldung an das LBR-Interface

Zusammen mit dem Startbefehl wird eine Anzahl von Parametern an das LBR-Interface übergeben, in dem z.B. die gewünschte Geschwindigkeit des Masteringprozesses und die Anzahl der Wiederholungen dieses zu masternden Auftrages übergeben werden. Das LBR-Interface übernimmt diese Einträge und beginnt nach Zustandsüberprüfung des Laser-Beam-Recorders mit der Überspielung der Nutz- und Steuerinformationen auf den Glasmaster. Die Nutz- und Steuerinformationen werden dazu dem bekannten Netzwerkpfad entnommen. Im Laufe des Masteringprozesses werden Zustandsmeldungen des LBR-Interfaces in ein vorgegebenes Netzwerkdateiverzeichnis geschrieben. Der Mastering-Controller übernimmt diese Informationen und stellt sie auf dem Bildschirm dar. Sofern Fehler während des Masteringprozesses aufgetreten sind, werden diese in die Meldungen integriert, der Mastering-Controller analysiert diese Meldungen und leitet die dann erforderlichen Maßnahmen ein.

Aufgrund des Vorhaltens von sowohl der Netzwerkfähigkeit als auch den physikalischen Überspielmedien kann das LBR-Interface beide Arten von Masteringprozessen ausführen. Masteringvorgänge, die mit physikalischen Überspielmedien ausgeführt werden, werden am LBR-Interface angemeldet. In den vom LBR-Interface erzeugten Zustandsmeldungen werden dazu entsprechende Hinweise eingetragen. Der Mastering-Controller erkennt diese Meldungen und nimmt den entsprechenden Laser-Beam-Recorder von Masteringvorgängen über das Netzwerk aus. Erst nach dem Rücksetzen dieses Zustands und dem Setzen der entsprechenden Meldung durch das LBR-Interface wird der zugehörige Laser-Beam-Recorder wieder in die Liste der für Masteringvorgänge über das Netzwerk verfügbaren Laser-Beam-Recorder aufgenommen.

### VII) Figuren

- Figur 1:: Schematische Darstellung der herkömmlichen Arbeitsabläufe zur Herstellung von Glasmastern in CD-Werken;
- Figur 2:: Schematische Darstellung eines erfindungsgemäßen Ausführungsbeispieles
- Figur 3:: Datenfluß und Hardwarekomponenten von LBR-Interface und LBR
- Figur 4:: LBR-Interface mit Netzwerkanbindung
- Figur 5:: Datenfluß und Hardwarekomponenten von Kontroll- und Bearbeitungsstationen
- Figur 6:: Kontroll- und Bearbeitungsstationen mit Netzwerkanbindung
- Figur 7:: Datenfluß und Hardwarekomponenten von Formatwandlungsstationen
- Figur 8:: Schematische Darstellung des Arbeitsflusses zur Erstellung von Glasmastern

### Vlll) Figurenbeschreibung

### Figur 1:

Figur 1 stellt schematisch die Arbeitsabläufe zur Erstellung von Glasmastern innerhalb eines CD-Werkes dar. Die zum Zweck der Vervielfältigung an das CD-Werk 2 angelieferten Nutzinformationen werden auf verschiedensten Musik-/Datenträgern 4 übermittelt. Innerhalb des CD-Werkes 2 werden mit den angelieferten Musik-/Datenträgern 3 im Premasteringbereich 5 trägerspezifische Kontroll- und Bearbeitungsschritte durchgeführt. Diese Kontroll- und Bearbeitungsschritte benötigen spezielle Software auf PCs oder Workstations 8, an die die entsprechenden, trägerspezifischen Einund Ausgabegeräte 110 angeschlossen sind. Müssen angelieferte Datenträger aufgrund der im Masteringbereich 118 geforderten Leistungswerte auf leistungsstärkere Träger umkopiert werden, geschieht dieses in einer Formatwandlungsstation 112 (PC oder Workstation), an die die entsprechenden Ein- und Ausgabegeräte 114 angeschlossen sind. Sofern bei den Eingabemedien 3 keine Formatwandlungen notwendig waren, können diese nach Beendigung der Kontroll- und Bearbeitungsschritte direkt dem Masteringbereich 118 zur Verfügung gestellt werden. Die in den Masteringbereich 18 übergebenen Überspielmedien werden manuell in die Lesegeräte 6 des LBR-Interfaces 119 eingelegt und anschließend mit Hilfe des Laser-Beam-Recorders 16, sowie dessen Steuerhard- und Software ein neuer Glasmaster gefertigt. Die Überspielmedien werden nach dem Masteringvorgang in einem manuellen Archiv 20 abgelegt. Werden später weitere Masteringvorgänge mit den gleichen Überspielmedien notwendig, können diese aus dem manuellen Archiv 20 ohne weitere Bearbeitungs - oder Kontrollprozesse erneut in den Masteringbereich 118 übergeben werden.

### Figur 2:

Figur 2 stellt schematisch ein erfindungsgemäßes Ausführungsbeispiel dar. Musik-/Datenträger 3, die von Kunden zum Zweck der Vervielfältigung angeliefert werden, werden in die Kontroll- und Bearbeitungsstationen 8 eingespielt. Alle im CD-Werk 2 im Gesamtablauf zur Herstellung von Glasmastern vorhandenen Geräte sind über ein Netzwerk 10 miteinander verbunden. Nach der Fertigsteltung der Nutz- und Steuerinformationen durch die Kontroll- und Bearbeitungsstationen 8 werden die Nutz- und Steuerinformationen 180 über das Netzwerk 10 in einen Archivverwaltungsrechner 22 übertragen. Der Archivverwaltungsrechner 22 sorgt dafür, daß diese Daten in einem automatischen Bandarchiv 24 dauerhaft aufbewahrt werden. Sollen Masteringaufträge durchgeführt werden, werden die in dem automatischen Bandarchiv 24 gespeicherten Nutz- und Steuerinformationen von dem Masteringcontroller 218 angefordert. Der Ojektverwaltungsrechner 14 überprüft die Nutzungsberechtigung und übernimmt die Steuerung des Informationsflusses der Nutz- und Steuerinformationen aus dem automatischen Bandarchiv 1200 über den Archivverwaltungsrechner 22 in das RAID-Array 30 des schnellen Zwischenspeichers 28 hinein. Dort stehen die Daten dem Masteringbereich 32 zur Verfügung.

### Figur 3:

Figur 3 stellt den Datenfluß und die Hardwarekomponenten des Masteringbereiches 32 dar. Das LBR-Interface 214 besteht aus einem PC oder einer Workstation, an das die notwendigen Lesegeräte 6 angeschlossen sind. Zwischen dem LBR-Interface 119 und den Lesegeräten 6 werden während des Masteringvorganges Zustandsinformationen 210 ausgetauscht. Die auf den Überspielmedien vorhandenen Nutz- und Steuerinformationen 180 werden von den Lesegeräten 6 gelesen, vom LBR-Interface 119 in einen für den jeweiligen CD-Typ notwendigen Datenfluß aus Nutz- und Steuerinformationen 120 umgerechnet und der Steuerhard- und Software 318 des Laser-Beam-Recorders 16 zur Verfügung gestellt. Zusätzlich werden während des Masteringprozesses Zustandsinformationen 314 über dessen Verlauf ausgetauscht.

### Figur 4:

Figur 4 zeigt schematisch die Darstellung des LBR-Interfaces 119, welches um die Netzwerkfähigkeit erweitert wurde. Das LBR-Interface 119 besteht aus einem PC oder einer Workstation, an das Lesegeräte 6 angeschlossen sind. Zwischen dem LBR-Interface 119 und den Lesegeräten 6 werden während des Masteringvorganges Zustandsinformationen 210 ausgetauscht. Die auf den Überspielmedien vorhandenen Nutz- und Steuerinformationen 180 werden von den Lesegeräten 6 gelesen, vom LBR-Interface 119 in einen für den jeweiligen CD-Typ notwendigen Datenfluß aus Nutz- und Steuerinformationen 120 umgerechnet und der Steuerhard- und Software 318 des Laser-Beam-Recorders 16 zur Verfügung gestellt. Zusätzlich werden während des Masteringprozesses Zustandsinformationen 314 über dessen Verlauf ausgetauscht In das LBR-Interface 119 ist eine Netzwerkkarte 215 integriert, die die Anbindung an das Netzwerk 10 bereitstellt. Ähnlich zu der Vorgehensweise bei den Überspielmedien werden Nutz- und Steuerinformationen 222 in diesem Fall über das Netzwerk 10 aus dem schnellen Zwischenspeicher 28 über die Netzwerkkarte 215 eingelesen und vom LBR-Interface 119 in einen dem jeweiligen CD-Typ erforderlichen Datenstrom 120 umgerechnet. Die während des Masteringvorganges von der Steuersoftware- und Hardware 318 erzeugten Zustandsmeldungen 314 werden an das LBR-Interface 119 geschickt. Umgekehrt empfängt die Steuerhardware 318 ebenfalls Zustandsmeldungen 314 zur Steuerung des Laser-Beam-Recorders 16. Das LBR-Interface 119 erzeugt zusätzlich Zustandsmeldungen 220 über die Anforderung von Nutz- und Steuerinformationen 222 an den schnellen Zwischenspeicher 28 bzw. empfängt entsprechende Meldungen 220 über den jeweiligen Zustand des schnellen Zwischenspeichers 28.

### Figur 5:

Figur 5 zeigt den Datenfluß und die Hardwarekomponenten von Kontrollund Bearbeitungsstationen. Die Kontroll- und Bearbeitungsstationen 8 bestehen aus einem PC oder einer Workstation, an die die benötigten Einlesegeräte 110 bzw. Ausgabegeräte 110 angeschlossen sind. Für den Kontroll- oder Bearbeitungsvorgang werden die auf den Musik-/Datenträgern gespeicherten Nutzinformationen 100 in die Kontroll- und Bearbeitungsstation 4 eingelesen und auf der lokalen Festplatte 5 abgelegt. Während dieses Transfervorganges werden Zustandsinformationen zwischen den Kontrollund Bearbeitungsstationen 8 sowie den Einlesegeräten 110 über den Verlauf dieses Vorganges ausgetauscht. Auf der Festplatte 50 geschieht die Bearbeitung der Nutzinformationen und die Erzeugung der erforderlichen Steuerinformationen. Nach beendigter Bearbeitung bzw. Kontrolle werden die Nutz- und Steuerinformationen als ein Datenstrom 120 in die Ausgabegeräte kopiert. Während dieses Kopiervorganges werden Zustandsinformationen über den ordnungsgemäßen Ablauf zwischen den Ausgabegeräten 110 und der Kontroll- und Bearbeitungsstation 8 ausgetauscht.

### Figur 6:

Figur 6 zeigt die schematische Darstellung von Kontroll- und Bearbeitungsstationen 8 mit einer Netzwerkanbindung. Die Kontroll- und Bearbeitungsstationen 8 bestehen aus einem PC oder einer Workstation, an die die benötigten Einlesegeräte 110 bzw. Ausgabegeräte 110 angeschlossen sind. Für den Kontroll- oder Bearbeitungsvorgang werden die auf den Musik/Datenträgern gespeicherten Nutzinformationen 100 in die Kontroll- und Bearbeitungsstation 8 eingelesen und auf der lokalen Festplatte 50 abgelegt. Während dieses Übertragungsvorganges werden Zustandsinformationen zwischen den Kontroll- und Bearbeitungsstationen 8 sowie den Einlesegeräten 110 über den Verlauf dieses Vorganges ausgetauscht. Auf der Festplatte 50 geschieht die Bearbeitung der Nutzinformationen und die Erzeugung der erforderlichen Steuerinformationen. Nach beendigter Bearbeitung bzw. Kontrolle werden die Nutz- und Steuerinformationen als ein Datenstrom 180 in die Ausgabegeräte kopiert. Während dieses Kopiervorganges werden Zustandsinformationen 181 über den ordnungsgemäßen Ablauf zwischen den Ausgabegeräten 110 und der Kontroll- und Bearbeitungsstation 8 ausgetauscht.

Zusätzlich ist in die Kontroll- und Bearbeitungsstation 8 eine Datenbankoberfläche 60 sowie eine Netzwerkkarte 215 integriert. Mit Hilfe der Datenbankoberfläche 60 kann der Benutzer der Kontroll- und Bearbeitungsstation 8 begleitende Informationen 211 zu den eingelesenen Nutzinformationen 100 hinzufügen. Analog zu der oben beschriebenen Vorgehensweise werden von der Kontroll- und Bearbeitungsstation Steuerinformationen erzeugt, die ebenfalls auf der lokalen Festplatte 50 gespeichert werden. Nach beendigter Bearbeitung bzw. Kontrolle der Nutzinformationen 100 durch die Kontroll- und Bearbeitungsstation 8 werden die Nutz- und Steuerinformationen entweder als ein Datenstrom 180 in die Ausgabegeräte kopiert oder als Datenstrom 222 über das Netzwerk 10 in den schnellen Zwischenspeicher 28 übertragen. Während dieses Übertragungsvorganges werden Zustandsinformationen über den ordnungsgemäßen Ablauf zwischen dem schnellen Zwischenspeicher 28 und der Kontroll- und Bearbeitungsstation 8 ausgetauscht. Die Speicherung der Nutz- bzw. Steuerinformationen erfolgt dateibasierend in den an das Netzwerk angeschlossenen Massenspeichern, die Speicherung der zugehörigen Begleitinformationen innerhalb der Datenbank des Ojektverwaltungsrechners.

### Figur 7:

Figur 7 zeigt die Datenflüsse und Hardwarekomponenten von Formatwandlungsstationen 400. Eine Formatwandlungsstation 400 besteht aus einem PC oder einer Workstation, an die Eingabegeräte 110 sowie Ausgabegeräte 110 angeschlossen sind. Die zu wandelnden Nutz- und Steuerinformationen 100 werden von den in den Eingabegeräten 110 eingelegten Musik-/Datenträgern ausgelesen, in das Ausgabeformat gewandelt und als Datenstrom 180 an die Ausgabegeräte 110 übergeben. Sowohl während des Einleseprozesses von den Eingabegeräten 110 als auch während des Ausleseprozesses zu den Ausgabegeräten 110 werden zwischen der Formatwandlungsstation 400 und den angeschlossenen Eingabegeräten 110 bzw. den Ausgabegeräten 110 Zustandsmeldungen 122, 250 über den jeweiligen Prozeßverlauf ausgetauscht.

### Figur 8:

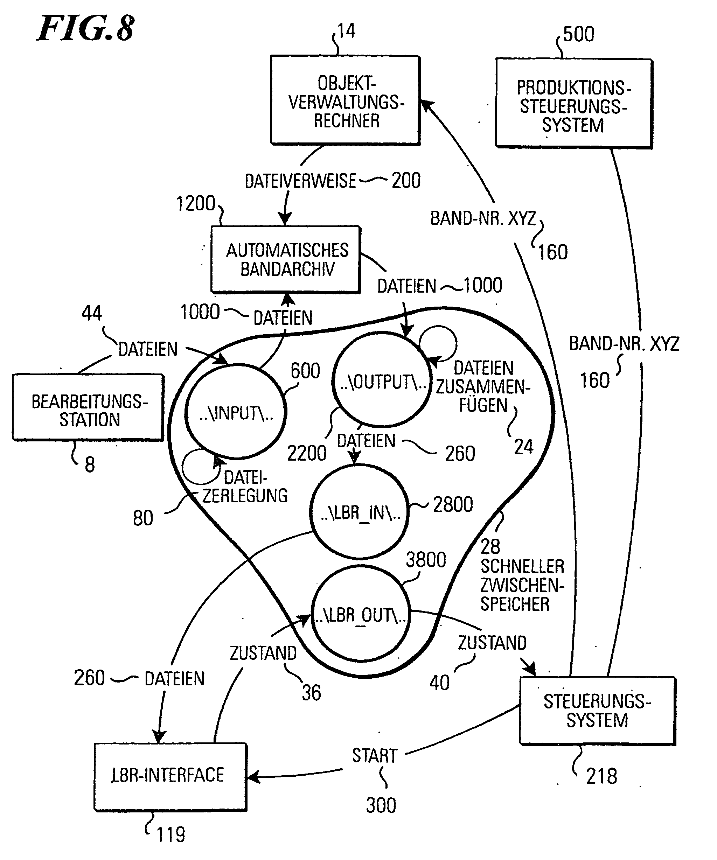

Figur 8 zeigt schematisch den Informationsfluß zur Erstellung von Glasmastern mit Hilfe eines netzwerkbasierenden Ansatzes. Die von den Kontroll- und Bearbeitungstationen 8 erzeugten Nutz- und Steuerinformationen werden als Dateien 44 in ein logisches Netzwerkdateiverzeichnis 600 geschrieben, welches sich auf einer Festplatte des schnellen Zwischenspeichers 28 befindet. Dort kann eine Zerlegung 80 der gespeicherten Nutz- und Steuerinformationen in mehrere kleinere Dateien erfolgen. Die derart erzeugten Dateien 1000 werden in dem automatischen Bandarchiv 1200 dauerhaft gespeichert. Zum Anstoßen eines Masteringprozesses wird eine Kennung 160 aus dem Produktionssteuerungssystem 500 an den Mastering Controller 218 übergeben. Der Mastering Controller 218 fordert mit dieser Kennung 160 über den Ojektverwaltungsrechner 14 die zugehörigen Dateien an. Der Objektverwaltungsrechner 14 kennt aufgrund der Einträge in seiner Datenbank die zugehörigen Dateiverweise 200 und fordert das automatische Bandarachiv 1200 auf, die entsprechenden Dateien 1000 in ein vorgegebenes Netzwerkdateiverzeichnis 2200 des schnellen Zwischenspeichers 28 zu übertragen. Dort wird, falls notwendig, in einem weiteren Prozeß 240 das ursprüngliche Format der Dateien wiederhergestellt. Anschließend werden die so erzeugten Dateien 260 in ein dem jeweiligen LBR-Interface 119 zugeordnetes Netzwerkdateiverzeichnis 2800 des schnellen Zwischenspeichers übertragen. Der Mastering Controller 18 gibt zu dem gewünschten Zeitpunkt des Masteringvorganges eine Startmeldung 300 an das LBR-Interface 119. Das LBR-Interface weiß aufgrund der vereinbarten Konventionen, in welchem Netzwerkdateiverzeichnis sich die zum Masteringprozeß gehörenden Dateien 260 befinden und fordert sie aus dem Netzwerkdateiverzeichnis 2800 an. Während des Masteringprozesses werden vom LBR-Interface Zustandsmeldungen 36 in ein vorgegebenes Netzwerkdateiverzeichnis 3800 des schnellen Zwischenspeichers geschrieben. Aufgrund der vereinbarten Konventionen weiß der Mastering Controller 218, welches Netzwerkdateiverzeichnis 3800 dem jeweiligen LBR-Interface 119 zugeordnet ist. Die in diesem Netzwerkdateiverzeichnis auflaufenden Zustandsmeldungen 40 werden vom Mastering Controller 218 analysiert und in entsprechende Reaktionen umgesetzt.

## Patentansprüche

1. System zur Bereitstellung von steuernden und aufzuzeichnenden Daten für mindestens einen zur Herstellung von Mastern für optische Datenträger (Mastering) bestimmten Laser-Beam-Recorder (LBR), umfassend ein Netzwerk (10), das den Laser-Beam-Recorder mit den Daten speist, und die weiteren folgenden Komponenten, die das Netzwerk (10) untereinander verbindet:
- mindestens ein mit einer Software zur Steuerung des Masteringablaufes ausgestaltetes Steuerungssystem (18)
- mindestens einen eine LBR-Schnittstelle repräsentierenden Rechner (119)
- mindestens einen Objektverwaltungsrechner (14), der den Datentransfer innerhalb des Netzwerkes (10) organisiert
- einen schnellen Zwischenspeicher (28)
- ein Datenarchiv (1200)
- mindestens einen Datenbearbeitungsrechner (8)
- mindestens ein Lesegerät (6, 110) für analoge und/oder digitale Datenträger
- und mindestens ein Keyboard zur Eingabe von Steuervorschriften für das System.

2. System nach Anspruch 1, **dadurch gekennzeichnet, dass** der schnelle Zwischenspeicher (28) Bestandteil eines eigenständigen Rechners ist.

3. System nach Anspruch 1, **dadurch gekennzeichnet, dass** der schnelle Zwischenspeicher (28) Bestandteil des die LBR-Schnittstelle (119) repräsentierenden Rechners ist.

4. System nach einem der Ansprüche 1 bis 3, **dadurch gekennzeichnet, dass** an die LBR-Schnittstelle (119) mindestens ein Datenträgerlesegerät (6) angeschlossen ist.

5. Verfahren zur Bereitstellung von Steuerdaten und aufzuzeichnenden Daten für mindestens einen zur Herstellung von Mastern für optische Datenträger (Mastering) bestimmten Laser-Beam-Recorder (16) (LBR) in einem System nach einem der Ansprüche 1 bis 4, wobei der Laser-Beam-Recorder (16) über ein Netzwerk (10) mit den Daten gespeist wird, **gekennzeichnet durch** folgende Schritte:
a) Einlesen von Nutzdaten (100) mittels eines Lesegerätes (110) für analoge und/oder digitale Datenträger (3)
b) Überprüfen bzw. Aufbereiten der Nutz- und Steuerdaten (120) für den Masterherstellungsprozess **durch** einen Datenbearbeitungsrechner (8) (Premastering)
c) Speichern der mittels des Datenbearbeitungsrechners (8) erzeugten Daten in einem schnellen Zwischenspeicher (28) oder in einem Datenarchiv (1200)
d) Überspielen der für den Masterherstellungsprozess erforderlichen Daten von dem Zwischenspeicher (28) oder dem Datenarchiv (1200) zu einem eine LBR-Schnittstelle repräsentierenden Rechner (119)
e) Eingeben von Steuervorschriften mittels mindestens eines Keyboards
f) Organisieren des Datentransfers innerhalb des Netzwerks mittels mindestens eines Objektverwaltungsrechners (14).

6. Verfahren nach Anspruch 5, **dadurch gekennzeichnet, dass** die aufzuzeichnenden Daten jeweils mit einer Kennung (160) versehen werden.

7. Verfahren nach Anspruch 5 oder 6, **dadurch gekennzeichnet, dass** für den Start eines Masterherstellungsprozesses auf ein mittels der Steuervorschriften bewirktes Signal der Steuersoftware die benötigten aufzuzeichnenden Daten aus dem Datenarchiv (1200) in ein zugeordnetes Netzwerkdateiverzeichnis (2800, 3800) des schnellen Zwischenspeichers (28) überspielt und von dort während des Masterherstellungsprozesses von der LBR-Schnittstelle (119) unmittelbar oder über die Steuersoftware angefordert werden.

8. Verfahren nach Anspruch 5 oder 6, **dadurch gekennzeichnet, dass** die benötigten aufzuzeichnenden Daten während des Masterherstellungsprozesses von der LBR-Schnittstelle (119) unmittelbar oder über die Steuersoftware direkt aus dem Datenarchiv (1200) angefordert werden.

9. Verfahren nach einem der Ansprüche 5 bis 8, **dadurch gekennzeichnet, dass** den Masterherstellungsprozesses beschreibende Zustandsmeldungen über die LBR-Schnittstelle (119) in ein vom Benutzer, dem Steuerungssystem oder der LBR-Schnittstelle (119) vorgegebenes Netzwerkdateiverzeichnis (2800, 3800) geschrieben werden.

10. Verfahren nach Anspruch 8, **dadurch gekennzeichnet, dass** mittels der Steuersoftware die Zustandsmeldungen, wie z.B. Schreibgeschwindigkeit oder Schreibfehler, analysiert und ggf. in erforderliche Reaktionen umgesetzt werden.

## Claims

1. System for providing controlling data and data to be recorded for at least one laser beam recorder (LBR) intended for producing masters for optical data carriers (mastering, comprising a network (10) which feeds the laser beam recorder with the data, and further components, as follows, which the network (10) connects together:
- at least one control system (18) arranged with software for controlling the mastering procedure
- at least one computer (119) constituting an LBR interface
- at least one object management computer (14) which organises data transfer within the network (10)
- a cache server (28)
- a data archive (1200)
- at least one data editing computer (8)
- at least one reader (6, 110) for analog and/or digital data carriers
- and at least keyboard for inputting controlling directions for the system.

2. System according to claim 1, **characterised in that** the cache server (28) is part of a stand-alone computer.

3. System according to claim 1, **characterised in that** the cache server (28) is part of the computer constituting the LBR interface (119).

4. System according to one of claims 1 to 3, **characterised in that** at least one data-carrier reader (6) is connected to the LBR interface (119).

5. Method for providing controlling data and data to be recorded for at least one laser beam recorder (LBR) (16) intended for producing masters for optical data carriers (mastering), in a system according to one of claims 1 to 4, the laser beam recorder (16) being fed with the data via a network (10), **characterised by** the following steps:
a) read-in of content material data (100) by means of a reader (110) for analog and/or digital data carriers (3)
b) checking and processing of the content material and control data (120) for the mastering process by a data editing computer (8) (premastering)
c) storage of the data generated by means of the data editing computer (8) in a cache server (28) or in a data archive (1200)
d) copying of the data required for the mastering process from the cache server (28) or the data archive (1200) to a computer (119) constituting an LBR interface
e) input of control directions by means of at least one keyboard
f) organisation of the transfer of data within the network by means of at least one object management computer (14).

6. Method according to claim 5, **characterised in that** the sets of data to be recorded are each provided with a code (160).

7. Method according to claim 5 or 6, **characterised in that**, to start a mastering process, in response to a signal from the control software caused by means of the control directions the data to be recorded which is required is copied from the data archive (1200) to an assigned network file directory (2800, 3800) in the cache server (28) and is requested from there by the LBR interface (119), during the mastering process, directly or via the control software.

8. Method a ccording to claim 5 o r 6, **characterised in that**, during the mastering process, the data to be recorded which is required is requested directly from the data archive (1200) by the LBR interface (119), directly or via the control software.

9. Method according to one of claims 5 to 8, **characterised in that** the status messages describing the mastering process are written, via the LBR interface (119), to a network file directory (2800, 3800) which is preset by the user, the control system or the LBR interface (119).

10. Method according to claim 8, **characterised in that** by means of the control software the status messages, such for example as recording speed or recording errors, are analysed and, if necessary, converted into requisite reactions.

## Revendications

1. Système pour la mise à disposition de données de commande et à enregistrer pour au moins un enregistreur par rayon laser (LBR) destiné à la réalisation d'originaux pour des supports optiques de données (Mastering) comprenant un réseau (10) qui amène les données à l'enregistreur par rayon laser et les autres composants ci dessous que le réseau (10) relie entre eux, c'est-à-dire :
- au moins un système de commande (18) réalisé avec un logiciel pour la commande du déroulement de la réalisation d'originaux,
- au moins un calculateur (119) représentant une interface de l'enregistreur par rayon laser (LBR),
- au moins un calculateur de gestion d'objets (14) qui organise le transfert de données à l'intérieur du réseau (10),
- une mémoire intermédiaire rapide (28)
- un fichier d'archivage des données (1200)
- au moins un calculateur de traitement de données (8),
- au moins un lecteur (6, 110) pour des supports de données analogiques et/ou digitaux et
- au moins un clavier pour entrer des instructions de commande pour le système.

2. Système selon la revendication 1, **caractérisé en ce que** la mémoire intermédiaire rapide (28) est une partie constituante d'un calculateur autonome.

3. Système selon la revendication 1, **caractérisé en ce que** la mémoire intermédiaire rapide (28) est une partie constituante du calculateur représentant l'interface de l'enregistreur par rayon laser (119).

4. Système selon l'une quelconque des revendications 1 à 3, **caractérisé en ce que** sur l'interface de l'enregistreur par rayon laser (119) est raccordé au moins un lecteur de supports de données (6).

5. Procédé pour la mise à disposition de données de commande et à enregistrer pour au moins un enregistreur par rayon laser (LBR) (16) destiné à la réalisation d'originaux pour des supports optiques de données (Mastering) dans un système selon l'une quelconques des revendications 1 à 4, l'enregistreur par rayon laser (16) recevant les données par l'intermédiaire d'un réseau (10), **caractérisé par** les étapes suivantes :
a) lecture de données utiles (100) par l'intermédiaire d'un lecteur (110) pour des supports de données analogiques et/ou digitaux (3),
b) Vérification ou traitement des données utiles et de commande (120) pour le processus de réalisation d'originaux par un calculateur de traitement de données (8) (Premastering),
c) Mémorisation des données générées à l'aide du calculateur de traitement de données (8) dans une mémoire intermédiaire rapide (28) ou dans un fichier d'archivage des données (1200),
d) Transfert des données nécessaires pour le processus de réalisation d'originaux depuis la mémoire intermédiaire (28) ou depuis le fichier d'archivage des données (1200) vers un calculateur (119) représentant une interface de l'enregistreur par rayon laser,
e) Introduction d'instructions de commande par l'intermédiaire d'au moins un clavier,
f) Organisation du transfert de données à l'intérieur du réseau à l'aide d'au moins un calculateur de gestion d'objets (14).

6. Procédé selon la revendication 5, **caractérisé en ce que** les données à enregistrer sont respectivement munies d'une identification (160).

7. Procédé selon la revendication 5 ou 6, **caractérisé en ce que**, pour le démarrage d'un processus de réalisation d'originaux, les données à enregistrer nécessaires sont, sur la base d'un signal du logiciel de commande engendré à l'aide des instructions de commande, transférées depuis le fichier d'archivage des données (1200) dans un répertoire de fichiers de réseau associé (2800, 3800) de la mémoire intermédiaire rapide (28) où elles sont, pendant le processus de réalisation d'originaux, demandées par l'interface de l'enregistreur par rayon laser (119), soit en direct soit par l'intermédiaire du logiciel de commande.

8. Procédé selon la revendication 5 ou 6, **caractérisé en ce que**, pendant le processus de réalisation d'originaux, l'interface de l'enregistreur par rayon laser (119) demande directement dans le fichier d'archivage des données (1200) les données nécessaires qui doivent être enregistrées, cette demande ayant lieu soit en direct soit par l'intermédiaire du logiciel de commande.

9. Procédé selon l'une quelconque des revendications 5 à 8, **caractérisé en ce que** des messages d'état décrivant le processus de réalisation d'originaux sont écrits par l'intermédiaire de l'interface de l'enregistreur par rayon laser (119) dans un répertoire de fichiers de réseau (2800, 3800), qui est imposé par l'utilisateur au système de commande ou à l'interface de l'enregistreur par rayon laser (119).

10. Procédé selon la revendication 8, **caractérisé en ce qu'**à l'aide du logiciel de commande, les messages d'état, comme par exemple la vitesse d'écriture ou les fautes d'écriture, sont analysés et éventuellement convertis en réactions nécessaires.
